# EUROPÄISCHE PATENTSCHRIFT

(11) **EP 3 463 735 B1**
(45) Veröffentlichungstag und Bekanntmachung des Hinweises auf die Patenterteilung: **10.11.2021**
(21) Anmeldenummer: 17727166.5
(22) Anmeldetag: 24.05.2017
(51) Int. Cl.: B24C 1/04, B26F 1/38

(54) **MASCHINE ZUM TRENNENDEN BEARBEITEN EINES WERKSTÜCKS UND VERFAHREN ZUM AUSSCHLEUSEN VON WERKSTÜCKTEILEN**
MACHINE FOR CUTTING A WORKPIECE AND METHOD FOR DISCHARGEING WORKPIECES
MACHINE POUR COUPER UNE PIÈCE DE TRAVAIL ET PROCÉDÉ DE DÉCHARGE DE PIÈCES DE TRAVAIL

(30) Priorität: 01.06.2016 DE 102016209550
(43) Veröffentlichungstag der Anmeldung: 10.04.2019
(73) Patentinhaber: TRUMPF Werkzeugmaschinen GmbH & Co. KG, 71254 Ditzingen (DE)
(72) Erfinder: EPPERLEIN, Peter, 71229 Leonberg (DE); KLINKHAMMER, Marc, 71254 Ditzingen (DE); KRAMPFERT, Johannes, 71254 Ditzingen (DE); NAHOCZKY, Oskar, 70374 Stuttgart (DE); SCHMAUDER, Frank, 72555 Metzingen (DE)
(74) Vertreter: Kohler Schmid Möbus Patentanwälte
(86) Internationale Anmeldenummer: PCT/EP2017/062544
(87) Internationale Veröffentlichungsnummer: WO 2017/207388

(56) Entgegenhaltungen:
- WO-A1-2015/091252
- WO-A1-2015/091347
- JP-A- 2001 191 233
- US-A- 5 763 852

## Beschreibung

Die vorliegende Erfindung betrifft eine Maschine zum trennenden Bearbeiten eines plattenförmigen Werkstücks mittels eines Bearbeitungsstrahls, mit: einer ersten Bewegungseinrichtung zur Bewegung des Werkstücks in einer ersten Richtung, einer zweiten Bewegungseinrichtung zur Bewegung eines den Bearbeitungsstrahl auf das Werkstück ausrichtenden Bearbeitungskopfs in einer zweiten, insbesondere zur ersten senkrechten Richtung, sowie zwei Werkstückauflageflächen zur Auflage des Werkstücks, zwischen denen ein sich entlang der zweiten Richtung erstreckender Spalt gebildet ist, sowie eine Teilerutsche, die zwischen einer ersten Stellung und einer zweiten Stellung bewegbar ist, wobei in der zweiten Stellung eine Rutschfläche der Teilerutsche in dem Spalt angeordnet ist, um ein von dem Werkstück freigeschnittenes, in den Spalt fallendes Werkstückteil seitlich neben den Spalt zu verbringen. Die Erfindung betrifft auch ein zugehöriges Verfahren zum Ausschleusen eines Werkstückteils aus einer Maschine zum trennenden Bearbeiten eines plattenförmigen Werkstücks mittels eines Bearbeitungsstrahls.

Eine solche Maschine zum trennenden Bearbeiten eines plattenförmigen Werkstücks ist aus der US5 763 852 A (Basis für den Oberbegriff des Anspruchs 1) bekannt geworden. Die dort beschriebene Maschine weist eine Schlackewanne auf, die in bzw. unter dem Spalt angeordnet ist und die in der zweiten Richtung verfahrbar ist, um die Schlackewanne zu leeren bzw. zu reparieren.

Eine Maschine zum trennenden Bearbeiten eines plattenförmigen Werkstücks ist aus der DE 10 2013 226 818 B4 bekannt geworden. An einer derartigen Maschine mit hybrider Bewegungsführung, bei der das Werkstück in einer ersten Richtung (X-Richtung) und der Bearbeitungskopf in einer zweiten Richtung (Y-Richtung) bewegt werden, ist zur Vermeidung von Beschädigungen durch den Bearbeitungsstrahl die Werkstückauflage im Verfahrbereich des Bearbeitungskopfs unterbrochen. In der Werkstückauflage erstreckt sich somit zwischen zwei Werkstückauflageflächen ein Spalt in Y-Richtung. Durch diesen Spalt werden der durch das Werkstück hindurch getretene Bearbeitungsstrahl sowie anfallende Schlacke und Schneidbutzen abgeführt. Bei dem Bearbeitungsstrahl kann es sich um einen Laserstrahl handeln, aber auch die Verwendung einer anderen Art von Hochenergiestrahl, beispielsweise in Form eines Plasmalichtbogens, oder eines Wasserstrahls ist möglich. Bei einer solchen Maschine können von einem Rest-Werkstück (Restgitter) freigeschnittene Werkstückteile, die ausreichend klein sind, nach unten durch den Spalt ausgeschleust werden.

In der DE 10 2013 226 818 B4 wird vorgeschlagen, innerhalb des Spalts mindestens zwei in der zweiten Richtung unabhängig voneinander verfahrbare Unterstützungsschlitten anzuordnen, die jeweils eine Auflagefläche zur Unterstützung von beim trennenden Bearbeiten geschnittenen Werkstückteilen aufweisen. Zum Ausschleusen des freigeschnittenen Werkstückteils können die Auflageflächen der Unterstützungsschlitten oder die Unterstützungsschlitten selbst unter eine Werkstück-Auflageebene abgesenkt werden. Die abgesenkten Auflageflächen bzw. die Unterstützungsschlitten können mit dem auf den Auflageflächen aufliegenden Werkstückteil an eine Ausschleusposition innerhalb des Spalts verfahren werden und zum Ausschleusen des Werkstückteils an der Ausschleusposition kann ein Abstand zwischen den beiden Unterstützungsschlitten vergrößert werden, so dass das Werkstückteil zwischen den beiden Unterstützungsschlitten nach unten fällt.

Als alternative Möglichkeit zur Trennung von frei durch den Spalt fallenden Schrott-Teilen von Gutteilen wird in der DE 10 2013 226 818 B4 vorgeschlagen, eine Kleinteilerutsche zu verwenden, die benachbart zu einer Auflagefläche an einem der Unterstützungsschlitten angebracht ist. Die Kleinteilerutsche kann zu diesem Zweck kurz vor dem Freischnitt unter das freizuschneidende Werkstückteil (Gutteil) gefahren werden. Alternativ kann durch eine dynamische Bewegung des Unterstützungsschlittens relativ zu dem Werkstückteil dieses seitlich verschoben werden, so dass das Werkstückteil idealer Weise im freien Fall auf die Kleinteilerutsche trifft. In beiden Fällen gleitet das Werkstückteil an der Kleinteilerutsche entlang und wird seitlich aus dem Spalt ausgeschleust.

In der WO 90/00952 ist eine Maschine zur Entnahme eines Produkts für eine Laserbearbeitungsmaschine beschrieben. In der Maschine ist ein Spalt gebildet, der senkrecht zu einer Längsrichtung eines Tisches zur Lagerung eines Werkstücks verläuft. Der Spalt verläuft auch entlang einer Bewegungsrichtung eines Bearbeitungskopfes, der an einer Unterseite eines Rahmens der Laserbearbeitungsmaschine angebracht ist. Eine Staubsammelkammer, die mit einem Gebläse in Verbindung steht und die eine abgedichtete Struktur aufweist, ist unterhalb des Spalts angeordnet. Eine erste und zweite schwenkbare Teilerutsche sind voneinander beabstandet an einer dem Bearbeitungskopf in Bezug auf eine Transportrichtung des Produkts nachgelagerten Seite angeordnet.

Aus der JP 2000 233 293 A ist eine Teile-Rutsche bekannt geworden, die eine erste Rutsche und eine zweite Rutsche aufweist, wobei die zweite Rutsche über ein Gelenk verschwenkbar an einer Laserbearbeitungsseite der ersten Rutsche angebracht ist. Die zweite Rutsche kann aus einer horizontalen Stellung verschwenkt werden, während die erste Rutsche gleichzeitig in ihrer horizontalen Stellung verbleibt. In der verschwenkten Stellung können kleine Werkstückteile an der zweiten Rutsche in Richtung auf einen Laserbearbeitungskopf gleiten, um diese aus der Maschine auszuschleusen. Bei der Schwenkbewegung der zweiten Rutsche wird auch eine Seitenwand eines unter dem Laserbearbeitungskopf gebildeten Kanals mitverschwenkt.

Aus der JP 2002 187 042 A ist ein Shooter-Equipment für Gutteile und Schrott beschrieben, u.a. um Gutteile und Schrott zu trennen bzw. zu sortieren. Das Shooter-Equipment weist einen Sortier-Shooter auf, der in einen Staubfangkanal einschwenkbar ist. An dem Sortier-Shooter können in seiner in den Staubfangkanal eingeschwenkten Stellung Werkstückteile entlang gleiten und seitlich aus dem Staubfangkanal ausgeschleust werden. Der Sortier-Shooter kann mittels eines Gelenks an einem unteren Abschnitt an dem Staubfangkanal befestigt sein und sich während des Bearbeitens des Werkstücks mittels eines Laserstrahls in einer vertikalen Stellung befinden.

Aus der JP 2001-191233 ist eine Bearbeitungsmaschine bekannt geworden, bei der mehrere Produkte in einer Mehrzahl von Lager-Abteilen einer Ablage sortiert gelagert werden. Die Maschine weist eine schwenkbare Rutsche auf, die in einer ersten Stellung an einen Öffnungsbereich eines Tisches anstellbar ist und die in einer zweiten, verschwenkten Stellung an ein Produkt-Aufnahmebauteil angrenzt, das ein jeweiliges Produkt aufnimmt. Das Produkt-Aufnahmebauteil kann an einer Position positioniert werden, die einem ausgewählten Lager-Abteil der Aufnahme entspricht. Das Produkt-Aufnahmebauteil kann derart ausgebildet sein, dass Produkte von dem Produkt-Aufnahmebauteil dem ausgewählten Lager-Abteil zugeführt werden.

### Aufgabe der Erfindung

Der Erfindung liegt die Aufgabe zugrunde, eine Maschine zur trennenden Bearbeitung plattenförmiger Werkstücke, insbesondere eine Laserbearbeitungsmaschine, sowie ein Verfahren bereitzustellen, die ein vereinfachtes Ausschleusen freigeschnittener Werkstückteile ermöglichen.

### Gegenstand der Erfindung

Diese Aufgabe wird gemäß einem ersten Aspekt gelöst durch eine Maschine der eingangs genannten Art, weiter umfassend: eine in der zweiten Richtung verfahrbare Aufnahmeeinrichtung zur Aufnahme des Werkstückteils an einer (variablen) Übergabeposition in der zweiten Richtung sowie zum Transport des an der Übergabeposition aufgenommenen Werkstückteils an unterschiedliche Ausschleuspositionen der Maschine in der zweiten Richtung, wobei die Aufnahmeeinrichtung mindestens eine Ausschleuseinrichtung aufweist, die zwischen einer ersten Stellung zur Unterstützung des Werkstückteils und einer zweiten Stellung zum Ausschleusen des Werkstückteils bewegbar ist. In der ersten Stellung ragt die Teilerutsche nicht oder nur teilweise in den Spalt hinein. Im zweiten Fall ragt die Teilerutsche typischer Weise nur so weit in den Spalt hinein, dass zumindest ein Verfahrbereich des Bearbeitungsstrahls in dem Spalt, der durch alle möglichen Positionen des Bearbeitungsstrahls in X- und Y-Richtung innerhalb des Spalts definiert ist, unbeeinflusst bleibt. Mit anderen Worten ragt die Teilerutsche in der ersten Stellung nicht in den Verfahrbereich des Bearbeitungsstrahls hinein, der in X-Richtung kleiner ausfallen kann als die Breite des Spalts. Unter einer Bewegung in der ersten Richtung bzw. in der zweiten Richtung wird jeweils eine Bewegung sowohl in positiver als auch in negativer erster bzw. zweiter Richtung verstanden. Die Bewegung der Teilerutsche zwischen der ersten Stellung und der zweiten Stellung kann stufenlos zwischen mehreren Zwischen-Positionen bzw. Zwischen-Stellungen erfolgen.

Wie weiter oben beschrieben wurde, können Werkstückteile, die ausreichend klein sind, d.h. deren Abmessungen in mindestsens einer Richtung kleiner sind als die Breite des Spalts, nach unten durch den Spalt aus der Maschine ausgeschleust werden. Werkstückteile, die ausreichend klein sind, um durch den Spalt zu fallen, können beispielsweise Abmessungen von maximal 160 mm x 160 mm aufweisen, wobei diese Abmessungen selbstverständlich von der Breite des Spalts abhängig sind.

Bei den Werkstückteilen, die in den Spalt fallen, kann es sich um Gutteile oder um Schrott handeln. Mit Hilfe der Teilerutsche kann eine Trennung zwischen Gutteilen und Schrott erfolgen, indem die Teilerutsche in der ersten Stellung verbleibt, wenn ein Werkstückteil in Form von Schrott in den Spalt fällt und nur dann in die zweite Stellung bewegt wird, wenn ein Gutteil seitlich aus dem Spalt ausgeschleust und in eine Übergabeposition neben dem Spalt verbracht werden soll. Die Teilerutsche erfüllt auf diese Weise die Funktion einer Teileweiche zum Sortieren bzw. zum Trennen von Gutteilen und Schrott.

Die Bewegung der Teilerutsche von der ersten Stellung in die zweite Stellung erfolgt typischer Weise erst nach dem Schnittende, d.h. nach dem Abschalten des Bearbeitungsstrahls, beispielsweise eines Laserstrahls. Die Bewegung der Teilerutsche von der ersten in die zweite Stellung geschieht in der Regel erst nach dem Abschalten des Bearbeitungsstrahls, um die Verschmutzung der Teilerutsche zu minimieren bzw. um den Austritt von Schneidschlacke, Gas oder Staub aus einem in dem Spalt unterhalb einer Werkstück-Auflageebene angeordneten Absaugkasten zu verhindern, der bei der Bewegung der Teilerutsche in die zweite Stellung typischer Weise nicht mehr gegen die Umgebung abgedichtet ist. Abhängig von der Größe, Anzahl und Anordnung der zu schneidenden bzw. freizutrennenden Werkstückteile kann die Bewegung der Teilerutsche in die zweite Stellung aber auch bereits vor dem Abschalten des Bearbeitungsstrahls beginnen, um die zum Ausschleusen der Werkstückteile benötigte Zeit zu minimieren. Beispielsweise kann die Teilerutsche bereits in die zweite Stellung bewegt werden, bevor einzelne oder mehrere über Mikrostege (Microjoints) mit dem Restwerkstück verbundene Werkstückteile in einem (gemeinsamen) letzten Trennschnitt freigetrennt werden.

Die Teilerutsche kann von der zweiten Stellung wieder zurück in die erste Stellung bewegt werden, sobald das Werkstückteil die Rutschfläche verlassen hat oder ggf. bereits zu einem früheren Zeitpunkt, wenn das Bewegen der Teilerutsche von der zweiten Stellung in die erste Stellung bewirkt, dass das auf der Rutschfläche aufliegende Werkstückteil neben den Spalt gefördert wird, beispielsweise wenn die Rutschfläche durch die Bewegung von der zweiten in die erste Stellung steiler (allerdings nicht zu steil) ausgerichtet wird.

Um einen geeigneten Zeitpunkt für den Beginn der Bewegung von der zweiten Stellung in die erste Stellung zu bestimmen, kann die Maschine eine Sensoreinrichtung aufweisen. Die Sensoreinrichtung kann beispielsweise ausgebildet sein, das Erreichen der Übergabeposition bzw. das Verlassen der Rutschfläche durch das Werkstückteil zu detektieren. Die Sensoreinrichtung kann zu diesem Zweck beispielsweise ein Lichtgitter oder dergleichen aufweisen, welches das Austreten des Werkstückteils aus dem Absaugbereich bzw. das seitliche Austreten des Werkstückteils aus dem Spalt beim Verlassen der Rutschfläche detektiert. Eine Steuereinrichtung der Maschine kann die Bewegung der Teilerutsche von der zweiten in die erste Stellung auslösen, sobald das Verlassen der Rutschfläche durch das Werkstückteil bzw. das Erreichen der Übergabeposition detektiert wird.

Alternativ zur Bestimmung des Startzeitpunkts für die Bewegung der Teilerutsche von der zweiten in die erste Stellung mittels einer Sensoreinrichtung kann zu diesem Zweck die Fallzeit des Werkstückteils von der Werkstück-Auflageebene bis zum Erreichen der Rutschfläche der in der zweiten Stellung befindlichen Teilerutsche bestimmt werden, wobei ggf. die Zeit, die das Werkstückteil für das Rutschen entlang der Rutschfläche benötigt, ebenfalls berücksichtigt werden kann. Eine möglichst frühzeitige Bewegung der Teilerutsche von der zweiten in die erste Stellung ist günstig, da der Schneidprozess typischer Weise erst fortgesetzt werden kann, wenn die Teilerutsche sich zumindest annähernd wieder in der ersten Stellung befindet, und die Unterbrechung des Schneidprozesses durch die Teileausschleusung möglichst kurz sein soll.

Um die Unterbrechung des Schneidprozesses durch die Teileausschleusung zu minimieren und eine Teilesortierung zu ermöglichen, weist die Maschine eine (zumindest) in der zweiten Richtung verfahrbare Aufnahmeeinrichtung zur Aufnahme des Werkstückteils an der Übergabeposition sowie zum Transport des aufgenommenen Werkstückteils an unterschiedliche Ausschleuspositionen der Maschine entlang der zweiten Richtung auf. Während in der weiter oben zitierten DE 10 2013 226 818 B4 vorgeschlagen wird, zum Transport von Werkstückteilen an unterschiedliche Ausschleuspositionen entlang des Spalts die beiden Unterstützungsschlitten mit dem auf den Auflageflächen aufliegenden freigeschnittenen Werkstückteil an eine Ausschleusposition innerhalb des Spalts zu verfahren, wird bei der erfindungsgemäßen Maschine zu diesem Zweck eine Aufnahmeeinrichtung genutzt, die beispielsweise in der Art eines nach oben bzw. zur Teilerutsche hin offenen Teilebehälters (Auffangwagen bzw. Sortierwagen) ausgebildet sein kann. Dies ermöglicht eine Sortierung der Teile, die hauptzeitparallel und auch an Ausschleuspositionen erfolgen kann, die außerhalb des Verfahrbereichs der Unterstützungsschlitten bzw. außerhalb des Bearbeitungsbereichs der Maschine liegen.

Die Aufgabe der Aufnahmeeinrichtung ist es, das Werkstückteil an der Übergabeposition aufzunehmen und an einer gewünschten Ausschleusposition entlang des Spalts aus der Maschine auszuschleusen, beispielsweise indem das Werkstückteil in einer dort positionierten Kiste abgelegt bzw. in diese einsortiert wird. Die Übergabeposition stimmt typischer Weise näherungsweise mit der Freischneideposition entlang des Spalts überein, an der das Werkstückteil vom Restwerkstück getrennt wird. Die Aufnahmeeinrichtung kann bereits während des trennenden Bearbeitens des Werkstücks an der Übergabeposition angeordnet werden und nimmt das Werkstückteil an der Übergabeposition auf, sobald dieses die Rutschfläche verlässt. Die Aufnahmeeinrichtung verfügt typischer Weise über eine ausreichende Ausdehnung in der zweiten Richtung, um ein Werkstückteil nach dem Entlanggleiten an der Rutschfläche der Teilerutsche in der Übergabeposition sicher auffangen zu können. Die Ausdehnung wird andererseits so gering wie möglich gewählt, da eine zu große Ausdehnung der Aufnahmeeinrichtung bzw. des Fangwagens zu einem zu hohen Gewicht und somit ggf. zu einer begrenzten Sortiergeschwindigkeit beim Verbringen der Werkstückteile an unterschiedliche Ausschleuspositionen mittels der Aufnahmeeinrichtung führt. Die Sortierung von Werkstückteilen an unterschiedlichen Ausschleuspositionen bzw. in unterschiedliche Auffangbehälter, z.B. in Form von Kisten, mit Hilfe der Aufnahmeeinrichtung kann auf diese Weise hauptzeitparallel während der schneidenden Bearbeitung des Werkstücks erfolgen.

Bei den Ausschleuspositionen handelt es sich typischer Weise um vorgegebene Positionen in der zweiten Richtung (Y-Richtung) entlang des Spalts. An einer jeweiligen Ausschleusposition kann beispielsweise ein Auffangbehälter oder dergleichen angeordnet sein, um aus der Aufnahmeeinrichtung ausgeschleuste Werkstückteile aufzufangen. Die Auffangbehälter können beispielsweise in einer Reihe entlang der zweiten Richtung seitlich neben dem Spalt angeordnet sein, um Werkstückteile aufzufangen bzw. in die Auffangbehälter zu sortieren. Im einfachsten Fall kann die Aufnahmeeinrichtung, z.B. in der Art eines Auffangwagens, nur in einer Achsrichtung (Y-Richtung) seitlich entlang des Spalts verfahren werden, um die Werkstückteile in den in einer Reihe angeordneten Auffangbehältern abzulegen. Es ist aber auch möglich, dass die Auffangeinrichtung nicht nur in der zweiten Richtung, d.h. parallel zum Spalt, sondern auch in einer weiteren Richtung quer zum Spalt (z.B. der X-Richtung) bewegbar ist. In diesem Fall können zwei oder mehr Reihen von Auffangbehältern vorgesehen sein, die unterhalb einer Werkstückauflagefläche seitlich neben dem Spalt angeordnet sind. So können nicht nur in der zweiten Richtung, sondern auch in der weiteren Richtung unterschiedliche Ausschleuspositionen in der Maschine vorgesehen sein, wodurch eine größere Anzahl an Auffangbehältern bzw. Kisten befüllt werden kann. Um die Auffangbehälter aus der Maschine zu entnehmen und um diese von außerhalb der Maschine zuzuführen kann beispielsweise ein Kistenwagen verwendet werden, auf dem die Auffangbehälter angeordnet sind.

Die Maschine kann eine zusätzliche Bewegungseinrichtung zur Bewegung des Bearbeitungskopfs in der ersten Richtung (X-Richtung) innerhalb des Spalts aufweisen, beispielsweise wie dies in der eingangs zitierten DE 10 2013 226 818 B4 beschrieben ist. Der Bewegungsbereich des Bearbeitungskopfs ist hierbei typischer Weise auf den Spalt beschränkt, d.h. die Breite des Spalts ist größer oder entspricht gerade dem Verfahrbereich des Bearbeitungskopfs in X-Richtung.

Bei der erfindungsgemäßen Maschine weist die Aufnahmeeinrichtung mindestens eine Ausschleuseinrichtung auf, die zwischen einer ersten Stellung zur Unterstützung des Werkstückteils und einer zweiten Stellung zum Ausschleusen des Werkstückteils bewegbar ist. Die Bewegung der Ausschleuseinrichtung kann ebenso wie die Bewegung der Teilerutsche mit Hilfe einer Steuerungseinrichtung der Maschine gesteuert werden. Typischer Weise wird die Aufnahmeeinrichtung zunächst in die gewünschte Ausschleusposition verfahren, bevor die Ausschleuseinrichtung von der ersten in die zweite Stellung bewegt wird, um das Werkstückteil an der Ausschleusposition beispielsweise in einem dort angeordneten Auffangbehälter abzulegen bzw. um das Werkstückteil in einen dort angeordneten Auffangbehälter fallen zu lassen.

Bei einer Weiterbildung bildet die Ausschleuseinrichtung in der ersten Stellung zumindest einen Teilbereich eines Bodenbereichs der Aufnahmeeinrichtung und gibt in der zweiten Stellung eine Öffnung zumindest in dem Teilbereich des Bodenbereichs frei. Die Aufnahmeeinrichtung kann beispielsweise in der Art eines Auffangwagens in Form eines Teilebehälters ausgebildet sein, der einen Bodenbereich aufweist, der zumindest teilweise durch die Ausschleuseinrichtung (in der ersten Stellung) gebildet wird. Der Teilebehälter kann Seitenwände mit einer Schräge aufweisen, um die Werkstückteile in der Art eines Trichters zum tiefsten Punkt des Teilebehälters bzw. zum Bodenbereich zu kanalisieren.

Bei der Ausschleuseinrichtung kann es sich beispielsweise um einen Schieber handeln, der in der ersten Stellung den Bodenbereich bzw. einen Teilbereich des Bodenbereichs zur Auflage des Werkstückteils bildet und der in die zweite Stellung seitlich verfahren wird, so dass die Auflagefläche in der zweiten Stellung außerhalb des Bodenbereichs der Aufnahmeeinrichtung angeordnet ist und sich in dem Bodenbereich eine Öffnung bildet, durch die das Werkstückteil nach unten aus der Aufnahmeeinrichtung ausgeschleust werden kann. Insbesondere können in dem Bodenbereich zwei Schieber vorgesehen sein, die synchron und gegenläufig von der ersten in die zweite Stellung verschoben werden, so dass sich deren Abstand in der zweiten Richtung vergrößert und zwischen den beiden Schiebern eine Öffnung gebildet wird, durch welche das Werkstückteil ausgeschleust werden kann. Alternativ zur Verwendung von Schiebern zum Ausschleusen des Werkstückteils kann die Ausschleuseinrichtung beispielsweise als verschwenkbare Klappe ausgebildet sein, die in der ersten Stellung zur Auflage des Werkstückteils dient und (im Wesentlichen) horizontal ausgerichtet ist und in der zweiten Stellung typischer Weise nach unten verschwenkt ist, um eine Öffnung im Bodenbereich der Aufnahmeeinrichtung freizugeben. Auch in diesem Fall können beispielsweise zwei Klappen vorgesehen sein, welche synchron von der ersten Stellung in die zweite Stellung verschwenkt werden, um das Werkstückteil nach unten auszuschleusen.

Bei einer weiteren Ausführungsform umfasst die Maschine mindestens einen in der zweiten Richtung innerhalb des Spalts verfahrbaren Unterstützungsschlitten, der eine Auflagefläche zur Unterstützung von beim trennenden Bearbeiten geschnittenen Werkstückteilen aufweist, wobei der Unterstützungsschlitten und/oder die Auflagefläche relativ zum Unterstützungsschlitten bevorzugt unter eine durch die Werkstückauflageflächen gebildete Werkstück-Auflageebene absenkbar ist/sind. Wie in der eingangs zitierten DE 10 2013 226 818 B4 beschrieben ist, die durch Bezugnahme zum Inhalt dieser Anmeldung gemacht wird, kann während der trennenden Bearbeitung, insbesondere beim Freischneiden, ein Werkstückteil von dem bzw. von den Auflageflächen der Unterstützungsschlitten unterstützt werden, beispielsweise um zu verhindern, dass dieses nach dem Freischneiden unkontrolliert in den Spalt fällt. Zudem kann durch das gesteuerte Absenken der Auflagefläche(n) bzw. des/der Unterstützungsschlitten gemeinsam mit den Auflageflächen ein auf der bzw. auf den Auflagefläche(n) aufliegendes Werkstückteil idealer Weise ohne Verkanten aus dem Restwerkstück gelöst werden. Die Bewegung der Teilerutsche von der ersten in die zweite Stellung kann insbesondere zeitparallel mit dem Absenken des bzw. der Unterstützungsschlitten unter die Werkstück-Auflageebene erfolgen.

Bei einer weiteren Ausführungsform umfasst die Maschine eine Steuerungseinrichtung, die zur gesteuerten Bewegung der Aufnahmeeinrichtung an die Übergabeposition sowie an die unterschiedlichen Ausschleuspositionen der Maschine in der zweiten Richtung ausgebildet bzw. programmiert ist. Die Steuerungseinrichtung steuert typischer Weise zusätzlich zur Aufnahmeeinrichtung auch die Bewegung der Teilerutsche und der Ausschleuseinrichtung zwischen der ersten und der zweiten Stellung. Es versteht sich, dass die Steuerungseinrichtung zur Steuerung von weiteren Bauelementen der Maschine ausgebildet sein kann, insbesondere den weiter unten beschriebenen Bauelementen. Die Steuerungseinrichtung wirkt zu diesem Zweck auf einen jeweiligen Aktor bzw. Antrieb ein, der die Bewegung des Bauelements ermöglicht. So kann die Steuerungseinrichtung beispielsweise auf einen Pneumatikzylinder oder dergleichen einwirken, welcher die Bewegung der Teilerutsche zwischen der ersten Stellung und der zweiten Stellung ermöglicht.

Bei einer Weiterbildung ist die Steuerungseinrichtung ausgebildet bzw. programmiert, zum Unterstützen eines Werkstückteils beim Freischneiden zwei Unterstützungsschlitten benachbart in dem Spalt anzuordnen sowie zum Fallenlassen des Werkstückteils in den Spalt einen Abstand zwischen den beiden Unterstützungsschlitten in der zweiten Richtung zu vergrößern. In diesem Fall liegt das Werkstückteil beim Freischneiden auf mindestens einer, typischer Weise auf den beiden Auflageflächen der Unterstützungsschlitten auf. Da beim Freischnitt typischer Weise eine Bearbeitung des Werkstücks in einem zwischen den beiden Unterstützungsschlitten gebildeten Schneidbereich erfolgt, grenzen die beiden Unterstützungsschlitten bei der benachbarten Anordnung in dem Spalt ggf. nicht unmittelbar aneinander an. Unter einer Anordnung der beiden Unterstützungsschlitten benachbart in dem Spalt wird eine Anordnung der Unterstützungsschlitten in einem geringen Abstand von typischer Weise ca. 5 mm in Y-Richtung verstanden. Es versteht sich, dass die beiden Unterstützungsschlitten beim Freischnitt auch unmittelbar aneinander angrenzen können, sofern diese in den Auflageflächen zwei einander gegenüber liegende Aussparungen aufweisen, in denen der Freischnitt erfolgen kann, beispielsweise wie dies in der DE 10 2013 226 818 B4 beschrieben ist.

Um das freigeschnittene Werkstückteil in den Spalt fallen zu lassen, wird der Abstand zwischen den beiden Unterstützungsschlitten vergrößert. Der Abstand zwischen den Unterstützungsschlitten wird hierbei typischer Weise so weit vergrößert, dass das freigeschnittene Werkstückteil die Unterstützung durch die Auflageflächen der Unterstützungsschlitten verliert und zwischen den Unterstützungsschlitten nach unten fällt. Die Vergrößerung des Abstandes kann durch eine synchrone, gegenläufige und symmetrische Bewegung der beiden Unterstützungsschlitten erfolgen, d.h. diese werden mit betragsmäßig gleicher (und typischer Weise hoher) Geschwindigkeit bzw. Beschleunigung auseinander gefahren, so dass das Werkstückteil beim Vergrößern des Abstands idealer Weise nicht seitlich verschoben wird und im freien Fall in den Spalt fällt.

Es versteht sich, dass auch andere Möglichkeiten bestehen, um das freigeschnittene Werkstückteil in den Spalt fallen zu lassen. Beispielsweise kann das freigeschnittene Werkstückteil nur auf der Auflagefläche eines Unterstützungsschlittens aufliegen, der mit einer dynamischen Bewegung in Y-Richtung verschoben wird, wodurch eine Relativbewegung des Unterstützungsschlittens zu einem auf der Auflagefläche aufliegenden Werkstückteil erzeugt wird. Das Werkstückteil kann der dynamischen Bewegung des Unterstützungsschlittens nicht folgen, so dass der Unterstützungsschlitten relativ zu dem Werkstückteil seitlich versetzt wird und das Werkstückteil in den Spalt fällt. Auch kann einer oder es können mehrere Unterstützungsschlitten und/oder deren Auflageflächen nach unten schwenkbar sein, um das freigeschnittene Werkstückteil in den Spalt fallen zu lassen.

Bei einer weiteren Weiterbildung ist die Steuerungseinrichtung ausgebildet bzw. programmiert, die Übergabeposition der Aufnahmeeinrichtung abhängig von einer Schwerpunktposition des Werkstückteils entlang der zweiten Richtung beim Freischneiden zu bestimmen. Die Übergabeposition sollte idealer Weise mit derjenigen Position übereinstimmen, an der das Werkstückteil die Teilerutsche verlässt. Sofern das Werkstückteil beim Freischneiden keinen lateralen Versatz in der zweiten Richtung erfährt, stimmt die Übergabeposition der Aufnahmeeinrichtung im Wesentlichen mit der Schwerpunktposition des Werkstückteils überein. In diesem Fall sollte die Aufnahmeeinrichtung in der Übergabeposition idealer Weise in der zweiten Richtung mittig bezüglich der Schwerpunktposition angeordnet werden.

Entlang des Wegs des Werkstückteils zwischen dem Freischneiden und dem Verlassen der Teilerutsche tritt in der Regel ein lateraler Versatz des Werkstückteiles in der zweiten Richtung relativ zur Ursprungslage des Werkstückteiles über dem Spalt zum Zeitpunkt des Freischnitts auf. Der laterale Versatz hängt u.a. von der Länge des Wegs ab, den das Werkstückteil auf der Teilerutsche zurücklegt, der Art und Weise des Abwurfs bzw. des Fallenlassen des Werkstückteils z.B. durch den bzw. die Unterstützungsschlitten in den Spalt sowie vom Auftreffen des Werkstückteils auf der Teilerutsche, bei dem ggf. eine Kraft in der zweiten Richtung auf das Werkstückteil ausgeübt werden kann. Dieser laterale, nicht deterministische Versatz führt zu einer Streuung der Positionen in der zweiten Richtung, an denen das freigeschnittene Werkstückteil die Teilerutsche verlässt, so dass die Ausschleuseinrichtung über eine gewisse Ausdehnung entlang des Spalts verfügen sollte, um die Streuung der Positionen der Werkstückteile beim Verlassen der Teilerutsche kompensieren zu können und auf diese Weise zu ermöglichen, dass alle Werkstückteile gefangen werden können. Da der laterale Versatz der Werkstückteile in der zweiten Richtung typischer Weise von der Schwerpunktposition in gleichem Maße in positiver wie auch in negativer Y-Richtung erfolgt, wird die Aufnahmeeinrichtung zum Aufnehmen des Werkstückteils in der Regel so angeordnet, dass sich die Übergabeposition in der Mitte der Längenausdehnung der Aufnahmeeinrichtung in Y-Richtung befindet.

Bei einer weiteren Ausführungsform ist die Steuerungseinrichtung ausgebildet, die Übergabeposition der Aufnahmeeinrichtung abhängig von einem Abstand zwischen der Schwerpunktposition des freigeschnittenen Werkstückteils und einer Mitten-Position der einander zugewandten Kanten der Auflageflächen der beiden beim Freischneiden des Werkstückteils benachbart angeordneten Unterstützungsschlitten zu bestimmen. Wie weiter oben beschrieben wurde, sollte die Aufnahmeeinrichtung keine zu große Ausdehnung in der zweiten Richtung aufweisen, da dies zu einer Vergrößerung des Gewichts der Aufnahmeeinrichtung führt und daher die Dynamik der Verfahrbewegung der Aufnahmeeinrichtung in der zweiten Richtung verringert.

An Stelle einer Vergrößerung der Ausdehnung der Aufnahmeeinrichtung in der zweiten Richtung ist es möglich, die Ausschleuseinrichtung vorausschauend so zu positionieren, dass ein (deterministischer) lateraler Versatz des Werkstückteils in der zweiten Richtung möglichst vollständig kompensiert wird. Ein solcher im Wesentlichen deterministischer lateraler Versatz kann beispielsweise auftreten, wenn das Werkstückteil in den Spalt fallengelassen wird, indem ein Abstand zwischen den beiden Unterstützungsschlitten vergrößert wird, auf deren Auflageflächen das Werkstückteil beim Freischneiden aufliegt, und wenn die Schwerpunktposition des Werkstückteils nicht mit der Mitten-Position zwischen den Auflageflächen übereinstimmt.

In diesem Fall wirkt sich die Lage des Werkstückteils, genauer gesagt ein Abstand zwischen der Schwerpunktposition des Werkstückteils und einer Mitten-Position der einander zugewandten Kanten der Auflageflächen der beiden beim Freischneiden des Werkstückteils benachbart angeordneten Unterstützungsschlitten auf den lateralen Versatz des Werkstückteils beim Ausschleusen durch den Spalt aus: Durch die Vergrößerung des Abstandes bzw. durch die Auffahrbewegung der Unterstützungsschlitten und die Reibungskraft zwischen der jeweiligen Auflagefläche und dem aufliegenden Werkstückteil wird das Werkstückteil durch den bzw. die Unterstützungsschlitten in der zweiten Richtung mitgeschleppt. Liegt ein Werkstückteil vor dem Auseinanderfahren der Unterstützungsschlitten nicht exakt mittig, sondern z.B. mit einem Großteil seiner Fläche nur auf der Auflagefläche eines Unterstützungsschlittens auf, wird dieses Werkstückteil in der Verfahrrichtung (positive oder negative Y-Richtung) dieses Unterstützungsschlittens mitgeschleppt bzw. mitbewegt. Anhand der Position eines solchen Werkstückteils relativ zur Kante der Auflagefläche des Unterstützungsschlittens kann daher ein lateraler Versatz ermittelt werden, den das Werkstückteil beim Verlassen der Teilerutsche relativ zu seiner ursprünglichen Position beim Freischneiden voraussichtlich aufweist. Zur sicheren Aufnahme des Werkstückteils kann die Aufnahmeeinrichtung unter Berücksichtigung dieses zu erwartenden lateralen Versatzes daher an einer geeigneten Übergabeposition positioniert werden, an der das Werkstückteil voraussichtlich die Teilerutsche verlässt.

Die einander zugewandten Kanten der Auflageflächen der beiden Unterstützungsschlitten sind nicht zwingend parallel zur ersten Richtung ausgerichtet, sondern diese können insbesondere auch unter einem Winkel, d.h. schräg, zur ersten Richtung und zur zweiten Richtung ausgerichtet sein. Die Mitten-Position zwischen den einander zugewandten Kanten der Auflageflächen in der zweiten Richtung wird in diesem Fall typischer Weise an einer mittigen Stelle der Auflageflächen in der ersten Richtung gemessen, d.h. typischer Weise in der Mitte des Spalts.

Liegt ein Werkstückteil im Wesentlichen nur auf der Auflagefläche eines der beiden Unterstützungsschlitten auf, wird dieses Werkstückteil bei der Bewegung dieses Unterstützungsschlittens entweder in positiver oder in negativer Y-Richtung mitgeschleppt. In diesem Fall kann die Übergabeposition beispielsweise bestimmt werden, indem der Abstand zwischen dem Schwerpunkt des Werkstückteils und der Mitten-Position berechnet wird und die Übergabeposition ausgehend von der Mitten-Position in der positiven oder negativen Y-Richtung lateral um das Doppelte dieses Abstandes versetzt wird, um das Werkstückteil mit Hilfe der Aufnahmeeinrichtung aufzufangen. Es versteht sich aber, dass zur genauen Ermittlung des lateralen Versatzes eines Werkstückteils bei der Ausschleusung durch den Spalt neben der Schwerpunktposition des Werkstückteils ggf. auch weitere geometrische Eigenschaften des Werkstückteiles herangezogen werden können, beispielsweise dessen (maximale) Abmessungen in X-Richtung und insbesondere in Y-Richtung.

Bei einer weiteren Ausführungsform weist die Maschine einen Absaugkasten auf, der unterhalb einer Werkstück-Auflageebene in dem Spalt angeordnet ist. Der Absaugkasten steht typischer Weise mit einem Gebläse in Verbindung und dient dazu, bei der trennenden Bearbeitung gebildete Gase sowie Schlacke aus einem in dem Absaugkasten gebildeten Absaugbereich abzusaugen. Der Absaugbereich in dem Absaugkasten ist typischer Weise allseitig geschlossen, um den Austritt von Schlacke, Gas oder Rauch zu verhindern und um die Absaugleistung zu optimieren, und weist nur nach oben hin zu dem Spalt bzw. zur Werkstück-Auflageebene hin eine Öffnung auf. Wie weiter oben beschrieben wurde, wird die Teilerutsche von der ersten in die zweite Stellung in dem Spalt bewegt, um Werkstückteile in Form von Gutteilen aus dem Absaugbereich bzw. aus dem Spalt zu fördern. Die Rutschfläche der Teilerutsche ragt somit in der zweiten Stellung in den Absaugbereich des Absaugkastens hinein. Es ist günstig, wenn in der ersten Stellung der Teilerutsche der Absaugkasten geschlossen bleibt, d.h. wenn der Absaugkasten in der ersten Stellung gegen die Umgebung abgedichtet bleibt. Um die Teilerutsche von der ersten in die zweite Stellung (und umgekehrt) zu bewegen, bestehen mehrere Möglichkeiten:
Bei einer Ausführungsform ist die Teilerutsche von der ersten Stellung in die zweite Stellung verschwenkbar und/oder verschiebbar, wobei die Teilerutsche in der ersten Stellung bevorzugt einen Abschnitt einer Seitenwand des Absaugkastens bildet. In der zweiten Stellung ragt die Teilerutsche und somit deren Rutschfläche in den Spalt hinein und schließt hierbei typischer Weise mit der Horizontalen einen Winkel ein, der so gewählt ist, dass in den Spalt fallende Werkstückteile entlang der Rutschfläche seitlich neben den Spalt verbracht werden können.

Zur Bewegung der Teilerutsche von der ersten Stellung in die zweite Stellung oder umgekehrt kann die Teilerutsche beispielsweise um ein Gelenk verschwenkt werden, wozu beispielsweise ein Aktor bzw. Aktoren in Form von Pneumatikzylindern verwendet werden können. Wird die Teilerutsche zwischen der ersten Stellung und der zweiten Stellung verschwenkt, kann die Teilerutsche beispielsweise einen keilförmigen Querschnitt aufweisen. Am breiten Ende des keilförmigen Querschnitts kann die Teilerutsche beidseitig Wellenstummel aufweisen, die am Maschinengrundkörper drehbar gelagert sind. In der ersten Stellung kann die Teilerutsche beispielsweise im Wesentlichen vertikal ausgerichtet sein, so dass diese nicht in den Spalt bzw. in den Absaugbereich hinein ragt. In diesem Fall kann die Teilerutsche in der ersten Stellung eine Seitenwand des Absaugkastens bilden, um diesen in der ersten Stellung dichtend zu verschießen.

Alternativ zum Verschwenken kann die Teilerutsche von der ersten Stellung in die zweite Stellung beispielsweise in horizontaler Richtung oder in einer zur Horizontalen geneigten Richtung linear verschoben werden. In diesem Fall kann die Teilerutsche zusätzlich zur Rutschfläche einen Wandabschnitt aufweisen, der z.B. benachbart zur Rutschfläche in vertikaler Richtung verläuft und der in der ersten Stellung die Seitenwand des Absaugkastens bildet. In diesem Fall weist der Absaugkasten typischer Weise eine Öffnung auf, durch welche die Rutschfläche der Teilerutsche von der ersten Stellung außerhalb des Absaugkastens in die zweite Stellung innerhalb des Absaugkastens bewegt werden kann. Zur Optimierung der Dichtwirkung können allseitig um die Öffnung des Absaugbereichs, der in der ersten Stellung von der Teilerutsche verschlossen wird, Dichtungen angebracht werden, gegen die die Teilerutsche beim Verschließen verschwenkt oder verschoben wird und daher den Absaugbereich abdichtet.

Bei einer Weiterbildung ist der Absaugkasten in einer Richtung quer zum Spalt, d.h. typischer Weise in X-Richtung, und/oder in Höhenrichtung verschiebbar. Dies ist insbesondere für den Fall günstig, dass die Teilerutsche keinen Abschnitt einer Seitenwand des Absaugkastens bildet, da durch ein Verschieben des Absaugkastens in der Regel ebenfalls sichergestellt werden kann, dass der Absaugbereich in dem Absaugkasten während der schneidenden Bearbeitung gegen die Umgebung abgedichtet ist. Die Bewegung der Teilerutsche kann mit der Bewegung des Absaugkastens gekoppelt sein oder unabhängig von dieser erfolgen. Zur gemeinsamen Bewegung kann die Teilerutsche beispielsweise starr an dem Absaugkasten befestigt sein. Es ist ggf. auch möglich, den Absaugkasten zu verkippen, um die Bewegung der Teilerutsche von der ersten in die zweite Stellung (und umgekehrt) zu ermöglichen.

Bei einer weiteren Ausführungsform erstreckt sich die Teilerutsche in der zweiten Richtung über die gesamte Länge des Spalts. Es hat sich als günstig erwiesen, wenn zum Ausschleusen von Werkstückteilen an beliebigen Positionen in der zweiten Richtung nur eine einzige Teilerutsche verwendet wird. Alternativ können ggf. zwei oder mehr Teilerutschen in der zweiten Richtung nebeneinander angeordnet sein, die unabhängig voneinander von der ersten Stellung in die zweite Stellung (und umgekehrt) bewegt werden können. In diesem Fall ist jedoch typischer Weise der Steuerungsaufwand erhöht, da zum Ausschleusen von Werkstückteilen, die in der Nähe eines Übergangs zwischen zwei benachbarten Teilerutschen freigeschnitten werden, gegebenenfalls zwei benachbarte Teilerutschen synchron von der ersten in die zweite Stellung (und umgekehrt) bewegt werden müssen.

Bei einer weiteren Ausführungsform weist die Teilerutsche mindestens eine Dämpfungsschicht zur Dämpfung des Aufpralls von freigeschnittenen Werkstückteilen auf die Rutschfläche auf. Die Rutschfläche der Teilerutsche kann beispielsweise in Form eines Strukturblechs z.B. aus Edelstahl gebildet sein, um das Rutschen der Werkstückteile zu begünstigen, die Beschädigung der Werkstückteile zu vermeiden und um den Verschleiß der Teilerutsche zu reduzieren. Unter der Rutschfläche, die z.B. an dem Blech gebildet sein kann, ist bei der vorliegenden Ausführungsform mindestens eine Dämpfungsschicht bzw. eine dämpfende Zwischenlage angebracht, die einerseits die Geräuschentwicklung durch fallende Werkstückteile reduziert und andererseits das Auftreffen bzw. den Aufprall der fallenden Werkstückteile dämpft und auf diese Weise hilft, Beschädigungen an den Werkstückteilen zu vermeiden. An der Rückseite der Teilerutsche, d.h. an derjenigen Seite, die der Rutschfläche abgewandt ist, können z.B. Kupferbleche montiert sein, deren Aufgabe es ist, die Anhaftung von Schlacke zu verhindern, sofern die Teilerutsche in der ersten Stellung einen Abschnitt der Seitenwand des Absaugkastens bildet. Gegebenenfalls kann die Teilerutsche auch in der Art eines Förderbandes ausgebildet sein, d.h. die Rutschfläche bildet einen Teil des Förderbandes und das Werkstückteil wird gemeinsam mit der Rutschfläche durch den Antrieb des Förderbandes bewegt, so dass die Rutschfläche weniger steil angeordnet werden kann.

Ein weiterer Aspekt der Erfindung betrifft ein Verfahren der eingangs genannten Art, welches insbesondere an der weiter oben beschriebenen Maschine ablaufen kann, das Verfahren umfassend: Bewegen einer Teilerutsche von einer ersten Stellung in eine zweite Stellung, wobei in der ersten Stellung die Teilerutsche nicht in einen Spalt zwischen zwei Werkstückauflageflächen zur Auflage des Werkstücks oder zumindest nicht in einen Verfahrbereich des Bearbeitungsstrahls in dem Spalt hineinragt und wobei in der zweiten Stellung eine Rutschfläche der Teilerutsche in dem Spalt angeordnet ist, um ein von dem Werkstück freigeschnittenes, in den Spalt fallendes Werkstückteil seitlich neben den Spalt zu verbringen, Aufnehmen des Werkstückteils durch eine Aufnahmeeinrichtung an einer Übergabeposition seitlich neben dem Spalt, Verfahren der Aufnahmeeinrichtung entlang des Spalts zum Transportieren des aufgenommenen Werkstückteils an eine Ausschleusposition entlang des Spalts, sowie Ausschleusen des Werkstückteils aus der Aufnahmeeinrichtung an der Ausschleusposition. Das Verfahren kann insbesondere an der weiter oben beschriebenen Maschine durchgeführt werden, bei der es sich beispielsweise um eine Laserbearbeitungsmaschine handeln kann. In der ersten Stellung ragt die Teilerutsche zumindest nicht so weit in den Spalt hinein, dass der Weg des Bearbeitungsstrahls im Spalt durch die Teilerutsche beeinflusst bzw. verdeckt wird, d.h. die Teilerutsche ist in der ersten Stellung außerhalb des Verfahrbereichs des Bearbeitungsstrahls angeordnet, so dass die Teilerutsche in der ersten Stellung nicht vom Bearbeitungsstrahl getroffen wird.

Bei einer Variante umfasst das Verfahren zusätzlich: Anordnen von zwei innerhalb des Spalts verfahrbaren Unterstützungsschlitten benachbart in dem Spalt zum Unterstützen des Werkstückteils beim Freischneiden an einer Freischneideposition, typischer Weise zwischen den Unterstützungsschlitten, sowie Vergrößern eines Abstands zwischen den beiden Unterstützungsschlitten zum Fallenlassen des freigeschnittenen Werkstückteils in den Spalt. Wie weiter oben beschrieben wurde, können die Unterstützungsschlitten und/oder die Auflageflächen relativ zu den jeweiligen Unterstützungsschlitten bevorzugt unter eine durch die Werkstückauflageflächen gebildete Werkstück-Auflageebene abgesenkt werden. Die Absenkbewegung der Unterstützungsschlitten kann vor oder ggf. während des Vergrößerns des Abstands zwischen den beiden Unterstützungsschlitten erfolgen. Durch das Absenken der Unterstützungsschlitten kann das Werkstückteil vom Werkstück bzw. vom Restgitter entformt werden.

Bei einer Variante wird die Übergabeposition der Aufnahmeeinrichtung abhängig von einer Schwerpunktposition des Werkstückteils entlang der zweiten Richtung beim Freischneiden des Werkstückteils bestimmt. Die Übergabeposition kann mit der Schwerpunktposition des Werkstückteils, mit der Mitten-Position zwischen den beiden Kanten der Auflageflächen von zwei benachbart angeordneten Unterstützungsschlitten oder ggf. mit der Freischneideposition übereinstimmen. Insbesondere wenn das Werkstückteil durch eine Vergrößerung des Abstands zwischen zwei Unterstützungsschlitten in den Spalt fallengelassen wird, hat es sich als günstig erwiesen, zwischen der Mitten-Position und der Übergabeposition einen lateralen Versatz vorzunehmen, sofern das Werkstückteil nicht vollständig mittig bezüglich der Mitten-Position auf den Auflageflächen aufliegt.

Bei einer Weiterbildung dieser Variante wird die Übergabeposition der Aufnahmeeinrichtung abhängig von einem Abstand zwischen der Schwerpunktposition des freigeschnittenen Werkstückteils und einer Mitten-Position zwischen den einander zugewandten Kanten der Auflageflächen der beiden beim Freischneiden des Werkstückteils benachbart angeordneten Unterstützungsschlitten bestimmt. Wie weiter oben beschrieben wurde, kann auf diese Weise die Übergabeposition derart gewählt werden, dass sich die Aufnahmeeinrichtung idealer Weise an derjenigen Position befindet, an der zu erwarten ist, dass das Werkstückteil von der Rutschfläche seitlich neben den Spalt gelangt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Maschine zum trennenden Bearbeiten eines plattenförmigen Werkstücks in Form einer Laserschneidmaschine, welche einen Spalt aufweist, der zwischen zwei Werkstückauflageflächen gebildet ist,
- Fig. 2a,b: eine Darstellung eines Details der Maschine von Fig. 1 mit einer sich entlang des Spalts erstreckenden Teilerutsche, die in einer in Fig. 2a gezeigten Stellung außerhalb des Spalts angeordnet ist, d.h. nicht in diesen hineinragt, und die in einer in Fig. 2b gezeigten Stellung in den Spalt hinein verschwenkt ist, sowie mit einer parallel zum Spalt verfahrbaren Aufnahmeeinrichtung in Form eines Auffangwagens,
- Fig. 3a-c: Darstellungen des Auffangwagens bei der Bewegung von einer Übergabeposition an eine von mehreren Ausschleuspositionen seitlich entlang des Spalts, an denen jeweils ein Auffangbehälter angeordnet ist,
- Fig. 4a,b: eine Darstellung des Auffangwagens in einer Übergabeposition mit einem lateralen Versatz zu einer Mitten-Position zwischen zwei benachbart in dem Spalt angeordneten Unterstützungsschlitten sowie die Streuung der Positionen eines Werkstückteils bei der Übergabe in den Auffangwagen,
- Fig. 5a,b: eine schematische Ansicht des Querschnitts des Spalts mit einem in dem Spalt angeordneten Absaugkasten sowie mit der Teilerutsche von Fig. 2a,b in der ersten bzw. in der zweiten Stellung,
- Fig. 6a,b: eine Darstellung analog Fig. 5a,b, bei der die Teilerutsche bei der Bewegung von der ersten in die zweite Stellung linear verschoben wird,
- Fig. 7a,b: eine Darstellung analog Fig. 5a,b, bei welcher bei der Bewegung der Teilerutsche von der ersten in die zweite Stellung der Absaugkasten nach unten verschoben wird,
- Fig. 8a,b: eine Darstellung analog Fig. 5a,b, bei welcher bei der Bewegung der Teilerutsche von der ersten in die zweite Stellung auch der Absaugkasten seitlich verschoben wird, sowie
- Fig. 9a,b: eine Darstellung analog Fig. 5a,b, bei welcher bei der Bewegung der Teilerutsche von der ersten in die zweite Stellung die Teilerutsche in der Art eines Teleskops ausgefahren wird.

In der folgenden Beschreibung der Zeichnungen werden für gleiche bzw. funktionsgleiche Bauteile identische Bezugszeichen verwendet.

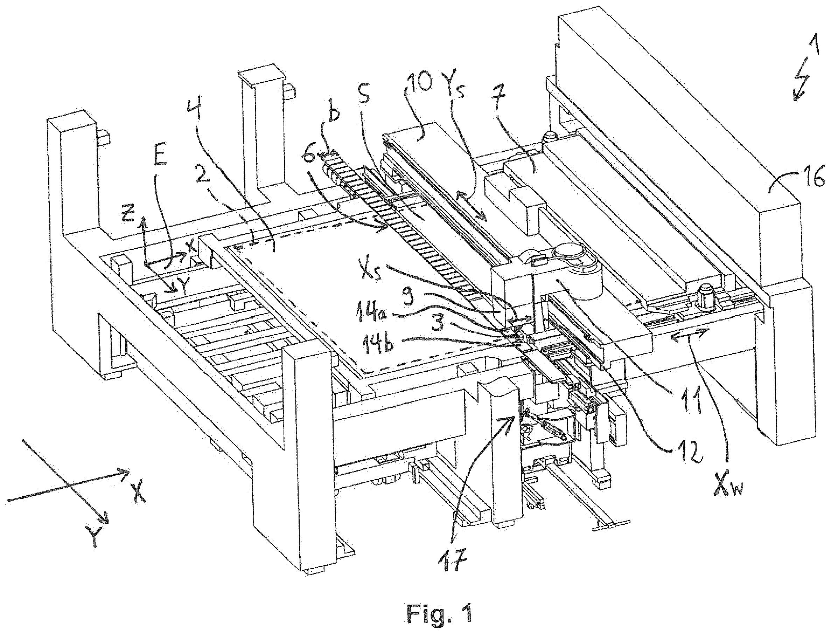

Fig. 1 zeigt einen beispielhaften Aufbau einer Maschine 1 zum trennenden Bearbeiten, genauer gesagt zum Laserschneiden, eines gestrichelt dargestellten plattenförmigen Werkstücks 2 mittels eines Bearbeitungsstrahls in Form eines Laserstrahls 3, der von einer nicht näher bezeichneten Laserquelle erzeugt wird. Zur schneidenden Bearbeitung des Werkstücks 2 kann an Stelle des Laserstrahls 3 auch eine andere Art von thermischem Bearbeitungsstrahl, beispielsweise eine Plasmafackel, oder ein Wasserstrahl eingesetzt werden. Das Werkstück 2 liegt bei der Bearbeitung auf zwei fest stehenden Werkstückauflageflächen 4, 5 auf, die im gezeigten Beispiel die Oberseiten von zwei Werkstücktischen bilden und die eine Werkstück-Auflageebene E (X-Y-Ebene eines XYZ-Koordinatensystems) zur Auflage des Werkstücks 2 definieren. Die Werkstückauflageflächen 4, 5 können durch Tischflächen oder durch stiftförmige Auflageelemente (Pins), Auflagebänder, Bürsten, Rollen, Kugeln, Luftpolster o.ä. gebildet werden.

Mittels einer herkömmlichen Bewegungs- und Halteeinrichtung 7, welche einen Antrieb sowie Klemmeneinrichtungen in Form von Spannpratzen zum Festhalten des Werkstücks 2 aufweist, kann das Werkstück 2 auf den Werkstückauflageflächen 4, 5 in einer ersten Richtung X (im Folgenden: X-Richtung) gesteuert verschoben und an eine vorgegebene Werkstückposition X_{W} bewegt werden. Um die Bewegung des Werkstücks 2 in X-Richtung zu erleichtern, können auf den in Fig. 1 gezeigten Werkstücktischen Bürsten, Kugeln oder Gleitrollen angebracht sein, welche die eigentlichen Werkstückauflageflächen 4, 5 darstellen. Alternativ ist es beispielsweise möglich, zur Bewegung oder zur Unterstützung der Bewegung des Werkstücks 2 in X-Richtung die Werkstückauflageflächen 4, 5 selbst als Bewegungseinrichtung auszugestalten, beispielsweise in Form eines (umlaufenden) Förderbandes, wie dies in der DE 10 2011 051 170 A1 der Anmelderin beschrieben ist, oder in Form einer Werkstückauflage, wie sie in der JP 06170469 beschrieben ist.

Zwischen den beiden fest stehenden Werkstückauflageflächen 4, 5 ist ein Spalt 6 gebildet, der seitlich von den fest stehenden Werkstückauflageflächen 4, 5 begrenzt wird. Der Spalt 6 erstreckt sich in einer zweiten Richtung (im Folgenden: Y-Richtung) über die gesamte Breite der beiden Werkstückauflageflächen 4, 5. Ein Laserschneidkopf 9, der den Laserstrahl 3 auf das Werkstück 2 ausrichtet und fokussiert, ist mittels eines als Bewegungseinrichtung dienenden angetriebenen Schlittens 11, der an einem fest stehenden Portal 10 geführt ist, in Y-Richtung gesteuert verfahrbar. Der Laserschneidkopf 9 ist im gezeigten Beispiel zusätzlich auch in X-Richtung verfahrbar und kann mit Hilfe einer an dem Schlitten 11 angebrachten zusätzlichen Bewegungseinrichtung 12, beispielsweise in Form eines Linearantriebs, in X-Richtung gesteuert verfahren werden. Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition X_{S}, Y_{S} innerhalb des Spalts 6 positioniert werden.

In dem in Fig. 1 gezeigten Spalt 6 sind zur zusätzlichen Unterstützung des Werkstücks 2 und zur Unterstützung von beim trennenden Bearbeiten geschnittenen Werkstückteilen zwei Unterstützungsschlitten 14a, 14b angeordnet. Die beiden Unterstützungsschlitten 14a, 14b erstrecken sich jeweils über die gesamte Breite b des Spalts 6 und sind in dem Spalt 6 in Y-Richtung gesteuert und unabhängig voneinander verfahrbar. Die gesteuerte Bewegung der Unterstützungsschlitten 14a, 14b zwischen den Seitenkanten der fest stehenden Werkstückauflageflächen 4, 5 kann beispielsweise mit Hilfe von Spindelantrieben erfolgen, wobei die Spindelmutter an dem jeweiligen Unterstützungsschlitten 14a, 14b angebracht ist und die Spindel sowie der Antriebsmotor an einer der beiden fest stehenden Werkstückauflagen 4, 5 angebracht sind. Es versteht sich, dass die gesteuerte Bewegung der Unterstützungsschlitten 14a, 14b auch auf andere Weise realisiert werden kann.

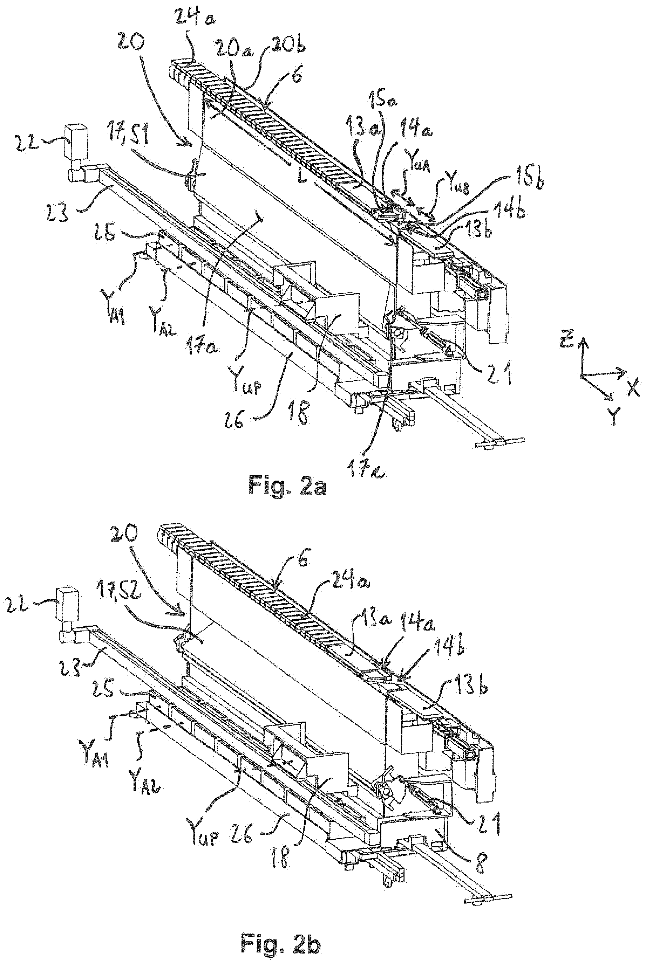

Die Unterstützungsschlitten 14a, 14b können in dem Spalt 6 jeweils an eine gewünschte Position Y_{UA}, Y_{UB} entlang der zweiten Richtung Y bewegt werden, um dort das Werkstück 2, genauer gesagt von dem Werkstück 2 freizuschneidende bzw. beim Bearbeiten geschnittene Werkstückteile, mittels einer an dem jeweiligen Unterstützungsschlitten 14a, 14b angebrachten Auflagefläche 15a, 15b zu unterstützen, wie dies in Fig. 2a,b besser zu erkennen ist. Die Auflagefläche 15a, 15b eines jeweiligen Unterstützungsschlittens 14a, 14b schließt im gezeigten Fall in Z-Richtung bündig mit den Werkstückauflageflächen 4, 5 ab, d.h. die Auflageflächen 15a, 15b der Unterstützungsschlitten 14a, 14b befinden sich in der Auflageebene E für das Werkstück 2. Die Auflageflächen 15a, 15b können einen ersten Teilbereich aus einem hitzebeständigen Material sowie einen zweiten Teilbereich aufweisen, der sich an den ersten Teilbereich anschließt und der beispielsweise als Bürstenauflage ausgebildet sein kann.

Die Bewegung der Unterstützungsschlitten 14a, 14b kann synchron erfolgen, d.h. der Abstand zwischen der Position Y_{UA} des ersten Unterstützungsschlittens 14a und der Position Y_{UB} des zweiten Unterstützungsschlittens 14b in der zweiten Richtung Y ist während der Bewegung konstant. Die Bewegung des ersten Unterstützungsschlittens 14a kann auch unabhängig von der Bewegung des zweiten Unterstützungsschlittens 14b erfolgen, d.h. der Abstand zwischen der Position Y_{UA} des ersten Unterstützungsschlittens 14a und der Position Y_{UB} des zweiten Unterstützungsschlittens 14b verändert sich während der Bewegung in Y-Richtung, wie weiter unten näher beschrieben wird.

Bei dem in Fig. 1 gezeigten Beispiel ist an den Unterstützungsschlitten 14a, 14b, genauer gesagt an den in X-Richtung verlaufenden, voneinander abgewandten Seitenkanten der Auflageflächen 15a, 15b, jeweils ein Unterstützungselement 13a, 13b sowie ein Überdeckungselement 24a, 24b zur Abdeckung des Spalts 6 zwischen den beiden Werkstückauflageflächen 4, 5 angebracht, von denen in Fig. 2a,b nur ein erstes Überdeckungselement 24a gezeigt ist. Die Unterstützungselemente 13a, 13b und die Überdeckungselemente 24a, 24b erstrecken sich über die gesamte Breite b des Spalts 6 und werden beim Bewegen der Unterstützungsschlitten 14a, 14b in Y-Richtung mitbewegt. Die Überdeckungselemente 24a, 24b sind im gezeigten Beispiel rolladenförmig ausgebildet, können aber auch auf andere Weise, z.B. teleskopförmig, schuppenförmig, als aufgerolltes Band, etc. ausgebildet sein. Die Oberseite der Unterstützungselemente 13a, 13b und der Überdeckungselemente 24a, 24b befindet sich auf der Höhe der Auflageflächen 15a, 15b der Unterstützungsschlitten 14a, 14b bzw. der Werkstückauflageflächen 4, 5. Die Unterstützungselemente 13a, 13b und die Überdeckungselemente 24a ,24b dienen zur Auflage von in den Spalt 6 hinein ragenden, nicht biegesteifen Teilbereichen des (Rest-)Werkstücks 2, die ohne eine solche Auflage gegebenenfalls mit den Unterstützungsschlitten 14a, 14b kollidieren könnten.

Zur Steuerung der schneidenden Bearbeitung weist die Maschine 1 eine in Fig. 1 dargestellte Steuerungseinrichtung 16 auf, die zur Koordinierung der Bewegungen des Werkstücks 2, des Laserschneidkopfs 9 sowie der Unterstützungsschlitten 14a, 14b dient, um eine gewünschte Werkstückposition X_{W}, eine gewünschte Schneidkopfposition X_{S}, Y_{S} sowie eine gewünschte Position Y_{UA}, Y_{UB} der Unterstützungsschlitten 14a, 14b einzustellen, um das Schneiden einer vorgegebenen Schnittkontur zu ermöglichen und das Werkstück 2 falls erforderlich in der Nähe des Spalts 6 zu unterstützen. Die Steuerungseinrichtung 16 dient im gezeigten Beispiel auch zur gesteuerten Bewegung einer in Fig. 2a,b gezeigten Teilerutsche 17 sowie einer Aufnahmeeinrichtung 18 in Form eines Auffangwagens zur Aufnahme von Werkstückteilen von der Teilerutsche 17.

Die Teilerutsche 17 ist in Fig. 2a in einer ersten, vertikalen Stellung S1 gezeigt, in der die Teilerutsche 17 nicht in den Spalt 6 hineinragt, so dass Schrottteile, Schneidbutzen und beim Schneidprozess entstehende Schlacke in einen unterhalb der Werkstück-Auflageebene E in dem Spalt 6 angeordneten Absaugkasten 20 fallen. Im Absaugkasten 20 ist eine verfahrbare Auffangwanne 8 angeordnet, in der sich die Schneidbutzen und Schrottteile sammeln und die zum Entleeren aus der Maschine 1 gezogen werden kann. Der Absaugkasten 20 steht mit einem Gebläse in Verbindung, um die Schlacke, Gase und Rauch aus einem innerhalb des Absaugkastens 20 gebildeten Absaugbereich abzusaugen. Wie in Fig. 2a,b ebenfalls zu erkennen ist, schließt der Absaugkasten 20 den Absaugbereich weitgehend dicht gegen die Umgebung ab, d.h. der Absaugkasten 20 weist nur nach oben zur Werkstück-Auflageebene E eine Öffnung auf, die größtenteils von den Überdeckungselementen 24a, 24b sowie von den Unterstützungsschlitten 14a, 14b abgedeckt wird. Wie in Fig. 2a,b ebenfalls zu erkennen ist, weist der Absaugkasten 20 eine erste vertikal verlaufende Seitenwand 20a sowie eine zweite vertikal verlaufende Seitenwand 20b auf, zwischen denen sich der Absaugbereich befindet. Bei der in Fig. 2a gezeigten ersten Stellung der Teilerutsche 17 bildet die Teilerutsche 17, genauer gesagt deren der Rutschfläche 17a abgewandte Rückseite 17b, einen Abschnitt der ersten vertikalen Seitenwand 20a des Absaugkastens 20, während die zweite vertikale Seitenwand 20b des Absaugkastens 20 einteilig ausgebildet ist. Die Wände 20a, 20b und der Boden des Absaugkastens 20 können miteinander verbunden sein oder aus separaten Bauteilen bestehen, die gegeneinander abgedichtet sind.

In der zweiten, in Fig. 2b gezeigten Stellung S2 der Teilerutsche 17 ist diese in den Spalt 6 hinein verschwenkt, so dass beim schneidenden Bearbeiten des Werkstücks 2 gebildete Werkstückteile, die in den Spalt 6 bzw. in den Absaugbereich hinab fallen, auf die Teilerutsche 17, genauer gesagt auf deren Rutschfläche 17a, auftreffen. Die Rutschfläche 17a der Teilerutsche 17 ist in der zweiten Stellung S2 unter einem Winkel zur Werkstück-Auflageebene E angeordnet, so dass unter der Wirkung der Schwerkraft auf die Rutschfläche 17a auftreffende Werkstückteile an der Rutschfläche 17a entlang gleiten, seitlich aus dem Spalt 6 ausgeschleust und von dem seitlich neben dem Spalt 6 angeordneten Auffangwagen 18 aufgenommen werden können.

Für das Verschwenken der Teilerutsche 17 von der ersten Stellung S1 in die zweite Stellung S2 und umgekehrt ist in der Maschine 1 ein Aktuator in Form eines Pneumatikzylinders 21 vorgesehen, der zwischen einer ersten Endstellung, in der die Teilerutsche 17 die erste Stellung S1 einnimmt, und einer zweiten Endstellung, in der die Teilerutsche 17 die zweite Stellung S2 einnimmt, verschiebbar ist. Es versteht sich, dass der Antrieb für die Bewegung der Teilerutsche 17 auch auf andere Weise realisiert werden kann.

Die Bewegung der Teilerutsche 17 von der ersten Stellung S1 in die zweite Stellung S2 erfolgt typischer Weise erst zu einem Zeitpunkt, bei dem das Schnittende erfolgt, d.h. sobald das Werkstückteil vom (Rest-)Werkstück freigeschnitten wird und der Laserstrahl 3, genauer gesagt die Laserquelle zur Erzeugung des Laserstrahls 3, abgeschaltet wird. Die Teilerutsche 17 kann von der ersten Stellung S1 in die zweite Stellung S2 verschwenkt werden, wobei parallel dazu eine Absenk-Bewegung der beiden Unterstützungsschlitten 14a, 14b unter die Werkstück-Auflageebene E erfolgt. Diese Absenk-Bewegung der Unterstützungsschlitten 14a, 14b ermöglicht es, ein freigeschnittenes Werkstückteil vom (Rest-)Werkstück 2 zu entformen. Durch eine anschließende gegenläufige Bewegung der Unterstützungsschlitten 14a, 14b nach außen wird das Werkstückteil 2a auf die Teilerutsche 17 fallen gelassen. An der Unterseite der Unterstützungselemente 13a, 13b können Abstreiferelemente (beispielsweise Bürsten; in den Abbildungen nicht sichtbar) angeordnet sein, die bei einer Bewegung der Unterstützungsschlitten 14a, 14b unter die Unterstützungselemente 13a, 13b das Werkstückteil 2a von den Unterstützungsschlitten 14a, 14b schieben.

Das Verschwenken der Teilerutsche 17 erfolgt in der Regel erst nach dem Abschalten des Laserstrahls 3, um eine Verschmutzung der Teilerutsche 17 zu minimieren bzw. um den Austritt von Schneidschlacke, Gasen oder Rauch aus dem Absaugkasten 20 zu verhindern, wenn die Teilerutsche 17 von der ersten Stellung S1 in die zweite Stellung S2 bewegt und hierbei eine Öffnung in dem Absaugkasten 20 freigegeben wird. Je nach Art, Größe und Anordnung der auszuschleusenden Werkstückteile 2a kann die Bewegung der Teilerutsche 17 in die zweite Stellung S2 auch bereits vor oder während des letzten Trennschnitts beginnen, um die zum Ausschleusen der Werkstückteile 2a benötigte Zeit zu verringern.

Um den frühestmöglichen Zeitpunkt zu erkennen, an dem die Teilerutsche 17 von der zweiten Stellung S2 zurück in die erste Stellung S1 verschwenkt werden kann, kann eine (nicht dargestellte) Sensoreinrichtung verwendet werden, die erkennt, zu welchem Zeitpunkt ein Werkstückteil die Teilerutsche 17 verlässt. Die Sensoreinrichtung kann zu diesem Zweck beispielsweise eine oder mehrere Lichtschranken bzw. ein Lichtgitter aufweisen, um den Austritt des Werkstückteils aus dem in dem Absaugkasten 20 gebildeten Absaugbereich zu detektieren. Wird dieser Austritt erkannt, kann die Steuereinrichtung 16 das Verschwenken der Teilerutsche 17 von der zweiten Stellung S2 in die erste Stellung S1 auslösen. Gegebenenfalls kann auch an dem Auffangwagen 18 eine Sensoreinrichtung angebracht werden, um das Auffangen des Werkstückteils zu detektieren. Alternativ oder zusätzlich kann die Fallzeit des Werkstückteils, d.h. die Zeitdauer, die das Werkstückteil benötigt, um von der Werkstück-Auflageebene E zur Teilerutsche 17 zu gelangen sowie ggf. die zusätzliche Zeitdauer, die das Werkstückteil benötigt, um an der Rutschfläche 17a der Teilerutsche 17 entlang zu gleiten und diese in Richtung auf den Auffangwagen 18 zu verlassen, bestimmt werden. Die Steuerungseinrichtung 16, die zur Steuerung der Bewegung der Teilerutsche 17 dient, kann zu diesem Zweck ggf. auf eine Datenbank zurückgreifen, in der entsprechende, aus Versuchen ermittelte Kenndaten für unterschiedliche Werkstückteile, z.B. für unterschiedliche Werkstückgeometrien, Werkstückmaterialien und Werkstückdicken hinterlegt sind. Das Verschwenken der Teilerutsche 17 von der zweiten Stellung S2 in die erste Stellung S1 sollte möglichst frühzeitig erfolgen, um den Schneidprozess möglichst frühzeitig fortsetzen zu können und auf diese Weise die Produktivität der Maschine 1 zu optimieren. Um die Förderung des Werkstückteils von der Teilerutsche 17 zu beschleunigen, kann gegebenenfalls der Beginn der Bewegung der Teilerutsche 17 von der zweiten Stellung S2 in die erste Stellung S1 bereits zu einem Zeitpunkt erfolgen, an dem das Werkstückteil auf die Teilerutsche bzw. auf die Rutschfläche 17a auftrifft, da bei der Bewegung von der zweiten Stellung S2 in die erste Stellung S1 die Teilerutsche 17 steiler angestellt wird und somit das Fördern des Werkstückteils begünstigt wird.

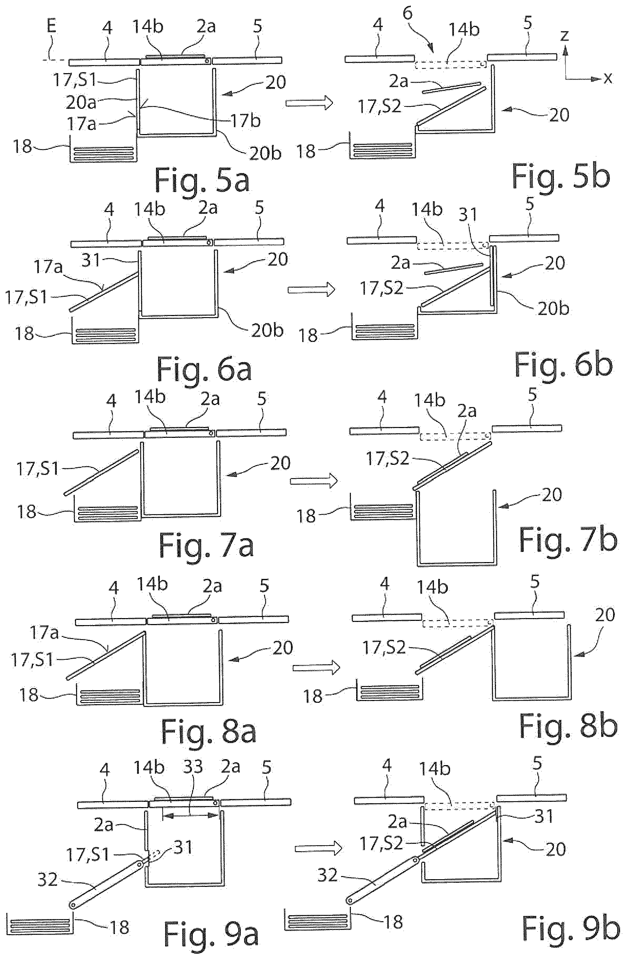

Wie in Fig. 2a,b zu erkennen ist, weist die Teilerutsche 17 ein längliches Profil mit im Wesentlichen keilförmigem Querschnitt auf. Am breiten Ende des keilförmigen Querschnitts weist die Teilerutsche 17 beidseitig Wellenstummel auf, die am Grundkörper der Maschine 1 drehbar gelagert sind. Die Rutschfläche 17a der Teilerutsche 17 ist im gezeigten Beispiel durch ein Edelstahl-Strukturblech gebildet, um das Rutschen von Werkstückteilen zu begünstigen, die Beschädigung von Werkstückteilen zu vermeiden und um den Verschleiß der Teilerutsche 17 zu reduzieren. Wie in Fig. 2a angedeutet ist, ist unter dem die Rutschfläche 17a bildenden Strukturblech eine Dämpfungsschicht 17c angebracht, welche eine Zwischenlage bildet und welche die Geräuschentwicklung durch fallende Werkstückteile reduzieren soll. Durch eine derartige Dämpfungsschicht 17c kann auch das Auftreffen der fallenden Werkstückteile gedämpft und somit können Beschädigungen an den Werkstückteilen vermieden werden. An der Rückseite 17b der Teilerutsche 17 sind Kupferbleche montiert, deren Aufgabe es ist, die Anhaftung von Schlacke zu verhindern, wenn die Teilerutsche 17 sich in der ersten Stellung S1 befindet, in der diese den Absaugkasten 20 verschließt. Zur Optimierung der Dichtwirkung sind allseitig um die Öffnung des Absaugbereichs des Absaugkastens 20, der von der Teilerutsche 17 verschlossen wird, Dichtungen vorgesehen, gegen die die Teilerutsche 17 bei der Bewegung in die erste Stellung S1 schwenkt. Wie in Fig. 2a,b ebenfalls zu erkennen ist, erstreckt sich die Teilerutsche 17 bei dem in Fig. 8a-c gezeigten Beispiel über die gesamte Länge L des Spalts 6 zwischen den beiden Werkstückauflageflächen 4, 5. Auf diese Weise wird erreicht, dass die Teilerutsche 17 an einer beliebigen Position entlang des Spalts 6 freigeschnittene Werkstückteile aufnehmen und seitlich neben den Spalt 6 fördern kann.

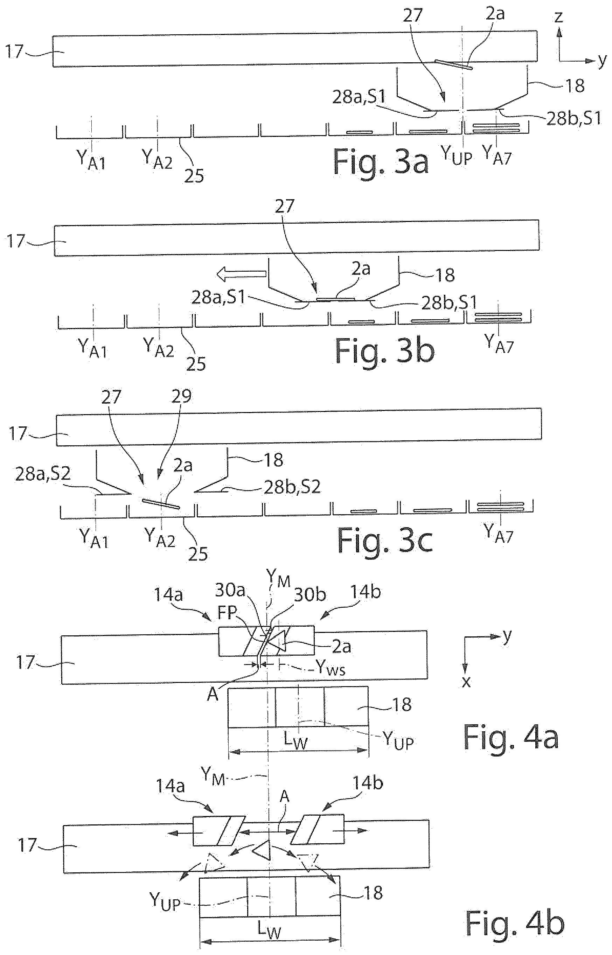

Für die gesteuerte Bewegung des Auffangwagens 18 in der zweiten Richtung Y weist die Maschine 1 einen Aktuator in Form eines Linearantriebs 22 auf, der es ermöglicht, den Auffangwagen 18 entlang einer sich in Y-Richtung erstreckenden Führungsschiene 23 (Sortierachse) seitlich neben dem Spalt 6 zu verfahren. Auf diese Weise kann der Auffangwagen 18 an unterschiedlichen Positionen aus dem Spalt 6 ausgeschleuste Werkstückteile 2a (vgl. auch Fig. 3a-c) an einer jeweiligen Übergabeposition Y_{UP} aufnehmen bzw. auffangen und diese an eine gewünschte Ausschleusposition Y_{A1}, Y_{A2}, ... entlang des Spalts 6 verbringen, an denen jeweils ein Auffangbehälter 25 in Form einer Teilekiste angeordnet ist. Der Auffangwagen 18 ermöglicht es daher, die von der Teilerutsche 17 ausgeschleusten Werkstückteile 2a beispielsweise in Abhängigkeit von ihrer Größe, Geometrie etc. in unterschiedliche Auffangbehälter 25 zu sortieren. Wie in Fig. 2a,b ebenfalls zu erkennen ist, sind die Auffangbehälter 25 in Y-Richtung in einer Reihe auf einem Kistenwagen 26 angeordnet, welcher es ermöglicht, die Auffangbehälter 25 bzw. die Kisten aus der Maschine 1 zu entnehmen, indem der Kistenwagen 26 in Y-Richtung bewegt wird, um diese zu entleeren. Entsprechend können die Auffangbehälter 25 durch eine Bewegung des Kistenwagens 26 der Maschine 1 zugeführt werden, um diese seitlich benachbart zum Spalt 6 zu positionieren.

Fig. 3a-c zeigen stark schematisch die Verfahrbewegung des Auffangwagens 18 von der Übergabeposition Y_{UP}, an der ein von dem Werkstück 2 freigeschnittenes Werkstückteil 2a von dem Auffangwagen 18 aufgenommen wird, in eine zweite Ausschleusposition Y_{A2} von insgesamt sieben Ausschleuspositionen Y_{A1}, Y_{A2}, ... entlang des Spalts 6. An der zweiten Ausschleusposition Y_{A2} ist ein zweiter Auffangbehälter 25 der Reihe von Auffangbehältern 25 angeordnet. Der Auffangwagen 18 wird typischer Weise bereits während der schneidenden Bearbeitung des Werkstückteils 2a mittels des Laserstrahls 3 an der Übergabeposition Y_{UP} positioniert, die von der Freischneideposition des freigeschnittenen Werkstückteils 2a in der zweiten Richtung Y entlang des Spalts 6 und somit typischer Weise auch von der Position der Unterstützungsschlitten 14a, 14b abhängt.

Wie weiter oben beschrieben wurde, kann die schneidende Bearbeitung des Werkstücks 2 wieder aufgenommen werden, wenn das freigeschnittene Werkstückteil 2a durch den Auffangwagen 18 aufgefangen wurde, oder ggf. bereits zu einem früheren Zeitpunkt (s.o.). Mit Hilfe des Auffangwagens 18 kann daher die Sortierung von Werkstückteilen 2a in unterschiedliche Auffangbehälter 25 bzw. Kisten hauptzeitparallel, d.h. gleichzeitig mit der schneidenden Bearbeitung des Werkstücks 2 durch den Laserstrahl 3 erfolgen. Wie in Fig. 3a-c gezeigt ist, fährt der Auffangwagen 18 zu diesem Zweck zunächst mit dem aufgenommenen Werkstückteil 2a über einen jeweils gewünschten Auffangbehälter 25, d.h. an eine von mehreren Ausschleuspositionen Y_{A1}, Y_{A2}, ... entlang des Spalts 6, und schleust das aufgenommene Werkstückteil 2a in den jeweiligen Auffangbehälter 25 aus, indem das Werkstückteil 2a in den Auffangbehälter 25 fallen gelassen wird.

Für das Fallenlassen des Werkstückteils 2a in den Auffangbehälter 25 weist der Auffangwagen 18 in seinem Bodenbereich 27 zwei Ausschleuseinrichtungen auf, die in Form von seitlich verschiebbaren Schiebern 28a, 28b ausgebildet sind und die zwischen einer jeweiligen ersten Stellung S1 und einer jeweiligen zweiten Stellung S2 in horizontaler Richtung verschiebbar sind. Die Schieber 28a, 28b decken in ihrer ersten Stellung S1 einen jeweiligen Teilbereich des Bodenbereichs 27 ab und geben in der zweiten Stellung S2 eine Öffnung 29 in dem in der ersten Stellung S1 abgedeckten Teilbereich des Bodenbereichs 27 frei. Bei dem in Fig. 3a-c gezeigten Beispiel werden die beiden Schieber 28a, 28b synchron und gegenläufig, d.h. in negativer bzw. in positiver Y-Richtung, von der ersten Stellung S1 in die zweite Stellung S2 verschoben, wodurch sich der Abstand zwischen den Schiebern 28a, 28b vergrößert und in dem Bodenbereich 27 eine Öffnung 29 gebildet wird, die sich im Wesentlichen über den gesamten Bodenbereich 27 erstreckt, wie in Fig. 3c zu erkennen ist.

Für die gesteuerte Bewegung der Schieber 28a, 28b von der ersten Stellung S1 in die zweite Stellung S2 (und umgekehrt) wirkt die Steuerungseinrichtung 16 auf einen entsprechenden Antrieb ein. Es versteht sich, dass die Ausschleuseinrichtung(en) auch auf andere als die hier gezeigte Weise ausgebildet und/oder bewegt werden können. Die Ausschleuseinrichtung(en) können beispielsweise als nach unten verschwenkbare Klappen ausgebildet sein, um das freigeschnittene Werkstückteil 2a auszuschleusen. Auch kann ggf. an Stelle von zwei Schiebern 28a, 28b nur ein einziger Schieber oder eine einzige Klappe als Ausschleuseinrichtung verwendet werden.

Bei den in Fig. 2a,b und in Fig. 3a,b,c gezeigten Beispielen kann der Auffangwagen 18 nur in Y-Richtung bewegt werden. Es versteht sich aber, dass der Auffangwagen 18 ggf. zusätzlich auch in X-Richtung verschiebbar sein kann. In diesem Fall können beispielsweise jeder Ausschleusposition Y_{A1}, Y_{A2}, ... in Y-Richtung zwei oder mehr Ausschleuspositionen in X-Richtung zugeordnet sein, um freigeschnittene Werkstückteile 2a in Auffangbehältern 25 abzulegen, die in zwei oder mehr Reihen in X-Richtung nebeneinander angeordnet sind. Auf diese Weise kann eine Sortierung von Werkstückteilen 2a in eine größere Anzahl von Auffangbehältern 25 erfolgen.

Wie in Fig. 3a-c ebenfalls zu erkennen ist, weist der Auffangwagen 28 seitliche Schrägen auf, die in der Art eines Trichters wirken, um das freigeschnittene Werkstückteil 2a zum tiefsten Punkt des Auffangwagens 18, d.h. zum Bodenbereich 27, zu kanalisieren, an dem die beiden Schieber 28a, 28b angeordnet sind. Das Ausschleusen des Werkstückteils 2a aus der Maschine 1 durch die Vergrößerung des Abstands zwischen den Schiebern 28a, 28b erfolgt analog zum Fallenlassen des Werkstückteils 2a in den Spalt 6 nach dem Freischneiden, welches nachfolgend anhand von Fig. 4a,b näher beschrieben wird.

Fig. 4a zeigt (von oben betrachtet) die beiden Unterstützungsschlitten 14a, 14b, die zum Freischneiden eines im gezeigten Beispiel dreieckigen Werkstückteils 2a vom dem in Fig. 4a,b nicht gezeigten (Rest-)Werkstück 2 benachbart zueinander in dem Spalt 6 angeordnet sind. Bei der benachbarten Anordnung sind die beiden Unterstützungsschlitten 14a, 14b typischer Weise in einem Abstand A angeordnet, der bei ca. 5 mm liegt. Zwischen den beiden Unterstützungsschlitten 14a, 14b ist in dieser Stellung somit ein schmaler Schneidbereich gebildet, in dem das Werkstückteil 2a mit Hilfe des Laserstrahls 3 an einer Freischneideposition FP vom (Rest-)Werkstück 2 getrennt wird. Nach dem Abschalten des Laserstrahls 3 werden die beiden Unterstützungsschlitten 14a, 14b aus der in Fig. 4a gezeigten benachbarten Stellung in einer gegenläufigen, synchronen Bewegung in negativer bzw. in positiver Y-Richtung bewegt, wodurch sich der Abstand A zwischen den beiden Unterstützungsschlitten 14a, 14b vergrößert, bis das freigeschnittene Werkstückteil 2a zwischen den beiden Unterstützungsschlitten 14a, 14b in den Spalt 6 fällt und auf die in diesen eingeschwenkte Teilerutsche 17 trifft.

Wie in Fig. 4a angedeutet ist, verlässt das freigeschnittene Werkstückteil 2a die Teilerutsche 17 nicht notwendiger Weise an der Freischneideposition FP bzw. in der Nähe einer Mitten-Position Y_{M} zwischen den einander zugewandten Kanten 30a, 30b der beiden Unterstützungsschlitten 14a, 14b in der in Fig. 4a gezeigten benachbarten Stellung. Vielmehr kann die Position in Y-Richtung variieren, an welcher das freigeschnittene Werkstückteil 2a die Teilerutsche 17 verlässt, d.h. diese Position weist eine Streuung auf, die typischer Weise nicht deterministisch vorhersagbar ist. Um die freigeschnittenen Werkstückteile 2a sicher auffangen zu können, weist der Auffangwagen 18 daher eine Länge L_{W} in Y-Richtung auf, die beispielsweise bei ca. 50 cm liegen kann. Die Länge L_{W} des Auffangwagens 18 in Y-Richtung sollte nicht zu groß gewählt werden, um zu verhindern, dass der Auffangwagen 18 ein zu großes Gewicht aufweist, was die Dynamik der Bewegung des Auffangwagens 18 beim Transport von Werkstückteilen 2a verringert.

Es versteht sich, dass der Auffangwagen 18 idealer Weise an einer Übergabeposition Y_{UP} in Y-Richtung positioniert werden sollte, an der die Wahrscheinlichkeit am größten ist, dass das freigeschnittene Werkstückteil 2a die Teilerutsche 17 verlässt. Falls das freigeschnittene Werkstückteil 2a in Y-Richtung mittig oder im Wesentlichen mittig auf den Auflageflächen 15a, 15b der Unterstützungsschlitten 14a, 14b aufliegt, kann die Übergabeposition Y_{UP} mit der Mitten-Position Y_{M} der Unterstützungsschlitten 14a, 14b beim Freischneiden übereinstimmen. Liegt das freigeschnittene Werkstückteil 2a jedoch vollständig oder nahezu vollständig auf einer der beiden Auflageflächen 15a, 15b auf, ist es günstig, zwischen der Mitten-Position Y_{M} und der Übergabeposition Y_{UP} einen lateralen Versatz vorzusehen, der den Abstand | Y_{WS} -Y_{M} | zwischen der Schwerpunktposition Y_{WS} des Werkstückteils 2a in Y-Richtung und der Mitten-Position Y_{M} der beiden Unterstützungsschlitten 14a, 14b berücksichtigt. Die Übergabeposition Y_{UP}, d.h. die Mittenposition des Auffangwagens 18 in Y-Richtung, kann beispielsweise um das Doppelte dieses Abstands | Y_{M} - Y_{WS} | gegenüber der Mitten-Position Y_{M} in Y-Richtung verschoben sein.

Liegt das Werkstückteil 2a z.B. hauptsächlich auf der Auflagefläche 15b des zweiten Unterstützungsschlittens 14b auf, so wird die Übergabeposition Y_{UP} in positiver Y-Richtung lateral versetzt. Durch den lateralen Versatz wird berücksichtigt, dass das auf der Auflagefläche 15b des zweiten Unterstützungsschlittens 14b aufliegende Werkstückteil 2a bei der Bewegung des zweiten Unterstützungsschlittens 14b in positiver Y-Richtung aufgrund von Reibungskräften mitgeschleppt wird, so dass dieses einen (im Wesentlichen deterministischen) lateralen Versatz in Y-Richtung erfährt. Es versteht sich, dass auf analoge Weise ein lateraler Versatz der Übergabeposition Y_{UP} in negativer Y-Richtung bestimmt werden kann, sofern das freigeschnittene Werkstückteil 2a größtenteils auf der Auflagefläche 15a des ersten Unterstützungsschlittens 14a aufliegt. Es versteht sich, dass für die Bestimmung der optimalen Übergabeposition Y_{UP} bzw. des lateralen Versatzes zur Mitten-Position Y_{M} der Unterstützungsschlitten 14a, 14b alternativ oder zusätzlich zur Schwerpunktposition Y_{WS} in Y-Richtung auch andere geometrische Eigenschaften des Werkstückteils 2a berücksichtigt werden können, beispielsweise die maximale Länge und die maximale Breite des Werkstückteils 2a.

Neben der in Zusammenhang mit Fig. 2a,b beschriebenen Verschwenkung der Teilerutsche 17 zwischen der ersten Stellung S1 und der zweiten Stellung S2 bestehen auch andere Möglichkeiten zur Bewegung der Teilerutsche 17 zwischen den beiden Stellungen S1, S2, von denen beispielhaft in Zusammenhang mit Fig. 5a,b bis Fig. 9a,b mehrere Möglichkeiten näher beschrieben werden. Fig. 5a bis Fig. 9a zeigen die Teilerutsche 17 jeweils in der ersten Stellung S1, während Fig. 5b bis Fig. 9b die Teilerutsche 17 jeweils in der zweiten Stellung S2 zeigen. In Fig. 5a,b bis Fig. 9a,b sind jeweils die beiden Werkstückauflageflächen 4, 5 sowie der zweite Unterstützungsschlitten 14b dargestellt, auf dem in Fig. 5a bis Fig. 9a das freigeschnittene Werkstückteil 2b aufliegt und der in Fig. 5b bis Fig. 9b unter die Werkstück-Auflageebene E abgesenkt sowie in Y-Richtung verfahren wurde, so dass das Werkstückteil 2a in den Spalt 6 fällt und auf die in der zweiten Stellung S2 befindliche Teilerutsche 17 bzw. auf deren Rutschfläche 17a trifft.

Fig. 5a,b zeigen analog zu Fig. 2a,b die Möglichkeit der Verschwenkung der Teilerutsche 17 zwischen der ersten Stellung S1 und der zweiten Stellung S2. Im Gegensatz zu dem in Fig. 2a,b gezeigten Beispiel bildet die Teilerutsche 17 in der ersten Stellung S1 nahezu die gesamte erste Seitenwand 20a des Absaugkastens 20. Anders als in Fig. 5a,b dargestellt ist, schließt der Absaugkasten 20 typischer Weise bündig an die jeweiligen Auflageflächen 4, 5 an, um das Austreten von Schlacke, Gasen und Rauch in die Umgebung zu vermeiden.

Fig. 6a,b zeigen ein Beispiel für eine lineare, horizontale Bewegung der Teilerutsche 17 zwischen der ersten Stellung S1 und der zweiten Stellung S2. Die Teilerutsche 17 weist im gezeigten Beispiel zusätzlich zur geneigten Rutschfläche 17a einen sich in Z-Richtung, d.h. vertikal, erstreckenden Wandabschnitt 31 auf, der in der ersten Stellung S1 die erste Seitenwand 20a des Absaugkastens 20 bildet. In der zweiten, in den Spalt 6 verschobenen Stellung S2 wird der sich in Z-Richtung erstreckende Wandabschnitt 31 mit der zweiten Seitenwand 20b des Absaugkastens 20 in Anlage gebracht, so dass das freigeschnittene Werkstückteil 2a auf die Rutschfläche 17a auftreffen kann. Der geneigte Teil der Teilerutsche 17, der die Rutschfläche 17a aufweist, kann mit dem Wandabschnitt 31 einteilig ausgebildet sein, es ist aber auch möglich, dass es sich bei dem Teil der Teilerutsche 17 mit der Rutschfläche 17a und der Wandabschnitt 31 um voneinander separierbare Bauteile handelt.

In Fig. 7a,b wird die Teilerutsche 17 analog zu Fig. 6a,b in horizontaler Richtung von der ersten Stellung S1 in die zweite Stellung S2 verschoben, wobei die Teilerutsche 17 in diesem Fall keinen Abschnitt der Seitenwand 20a des Absaugkastens 20 bildet, sondern der Absaugkasten 20 abgesenkt wird, um die Bewegung der Teilerutsche 17 von der ersten Stellung S1 in die zweite Stellung S2 und umgekehrt zu ermöglichen.

Fig. 8a,b zeigen ein Beispiel für eine lineare Bewegung der Teilerutsche 17, die wie in Fig. 6a,b und in Fig. 7a,b in X-Richtung erfolgt, wobei die Teilerutsche 17 bei dem in Fig. 8a,b gezeigten Beispiel am oberen Ende des Absaugkastens 20 befestigt ist und gemeinsam mit diesem so weit in X-Richtung verschoben werden kann, dass das Werkstückteil 2a in der zweiten Stellung S2 auf die Rutschfläche 17a der Teilerutsche 17 trifft.

Fig. 9a,b zeigt schließlich ein Beispiel für eine lineare Bewegung der Teilerutsche 17, bei der diese in der ersten Stellung in einem Förderband 32 integriert ist, welches sich an den Absaugkasten 20 anschließt. Die Teilerutsche 17 wird bei diesem Beispiel aus dem Förderband 32 herausgeschoben, bis die Teilerutsche 17 die zweite Stellung S2 erreicht hat, in der die Rutschfläche 17a in dem Spalt 6 gebildet ist. Bei dem in Fig. 9a,b gezeigten Beispiel weist die Teilerutsche 17 ebenfalls einen vertikalen Wandabschnitt 31 auf, der sich an die Rutschfläche 17a anschließt. Der vertikale Wandabschnitt 31 ist bei dem in Fig. 9a,b gezeigten Beispiel deutlich kleiner und überdeckt eine Öffnung in der ersten Seitenwand 20a des Absaugkastens 20, durch die die Teilerutsche 17 in den Absaugkasten 20 eingefahren wird.

Es versteht sich, dass die in Fig. 9a,b gezeigte Möglichkeit der Bewegung der Teilerutsche 17 zwischen der ersten Stellung S1 und der zweiten Stellung S2 ggf. auch ohne die Verwendung eines Förderbands 32, d.h. mit einem fest stehenden Teilbereich 32 der Teilerutsche möglich ist, sofern der Auffangwagen 18 erst dann an der Übergabeposition Y_{UP} positioniert wird, wenn die Teilerutsche 17 die zweite Stellung S2 erreicht hat.

Es versteht sich ebenfalls, dass andere als die hier beschriebenen Möglichkeiten bestehen, um die Teilerutsche 17 zwischen den beiden Stellungen S1, S2 zu bewegen. Auch kann die Teilerutsche 17 in der ersten Stellung S1 ein Stück weit in den Spalt 6 hineinreichen, beispielsweise wie dies in der in Fig. 9a gezeigten Variante gestrichelt dargestellt ist, wobei in diesem Fall der Wandabschnitt 31 weggelassen wird. Die Teilerutsche 17 ragt in diesem Fall nur so weit in den Spalt 6 hinein, dass die Teilerutsche 17 sich außerhalb eines Verfahrbereichs 33 des Bearbeitungsstrahls 3 in dem Spalt 6 befindet, von dem in Fig. 9a nur die Ausdehnung in X-Richtung dargestellt ist. Auf diese Weise kann die Zeit für die Bewegung der Teilerutsche 17 zwischen den beiden Stellungen S1, S2 verringert werden.

Alternativ zu dem in den Beispielen beschriebenen erfindungsgemäßen Auffangwagen 18 kann zum Bewegen von Werkstückteilen 2a in Y-Richtung entlang des Spalts 6 ggf. auch ein Förderband als nicht erfindungsgemäße Aufnahmeeinrichtung für die Werkstückteile 2a verwendet werden. Zur Sortierung der Werkstückteile 2a an unterschiedliche Ausschleuspositionen sind dann allerdings weitere Maßnahmen notwendig, beispielsweise das Vorsehen von entlang des Förderbands einschiebbaren oder einschwenkbaren Klappen, an denen die Werkstückteile vom Förderband in nebenstehende Teilekisten abgestreift werden können.

## Patentansprüche

1. Maschine (1) zum trennenden Bearbeiten eines plattenförmigen Werkstücks (2) mittels eines Bearbeitungsstrahls (3), mit:
einer ersten Bewegungseinrichtung (7) zur Bewegung des Werkstücks (2) in einer ersten Richtung (X),
einer zweiten Bewegungseinrichtung (11) zur Bewegung eines den Bearbeitungsstrahl (3) auf das Werkstück (2) ausrichtenden Bearbeitungskopfs (9) in einer zweiten Richtung (Y), sowie zwei Werkstückauflageflächen (4, 5) zur Auflage des Werkstücks (2), zwischen denen ein sich entlang der zweiten Richtung (Y) erstreckender Spalt (6) gebildet ist,
eine Teilerutsche (17), die zwischen einer ersten Stellung (S1) und einer zweiten Stellung (S2) bewegbar ist, wobei in der zweiten Stellung (S2) eine Rutschfläche (17a) der Teilerutsche (17) in dem Spalt (6) angeordnet ist, um ein von dem Werkstück (2) freigeschnittenes, in den Spalt (6) fallendes Werkstückteil (2a) seitlich neben den Spalt (6) zu verbringen,
**gekennzeichnet durch**
eine in der zweiten Richtung (Y) verfahrbare Aufnahmeeinrichtung (18) zur Aufnahme des Werkstückteils (2a) an einer Übergabeposition (Yᵤₚ) in der zweiten Richtung (Y) sowie zum Transport des an der Übergabeposition (Yᵤₚ) aufgenommenen Werkstückteils (2a) an unterschiedliche Ausschleuspositionen (Y_{A1}, Y_{A2}, ...) der Maschine (1) entlang der zweiten Richtung (Y),
wobei die Aufnahmeeinrichtung (18) mindestens eine Ausschleuseinrichtung (28a, 28b) aufweist, die zwischen einer ersten Stellung (S1) zur Unterstützung des Werkstückteils (2a) und einer zweiten Stellung (S2) zum Ausschleusen des Werkstückteils (2a) bewegbar ist.

2. Maschine nach Anspruch 1, bei welcher die Ausschleuseinrichtung (28a, 28b) in der ersten Stellung (S1) zumindest einen Teilbereich eines Bodenbereichs (27) der Aufnahmeeinrichtung (18) bildet und in der zweiten Stellung (S2) zumindest in dem Teilbereich des Bodenbereichs (27) eine Öffnung (29) freigibt.

3. Maschine nach einem der vorhergehenden Ansprüche, weiter umfassend:
mindestens einen in der zweiten Richtung (Y) innerhalb des Spalts (6) verfahrbaren Unterstützungsschlitten (14a, 14b), der eine Auflagefläche (15a, 15b) zur Unterstützung von beim trennenden Bearbeiten geschnittenen Werkstückteilen (2a) aufweist, wobei der Unterstützungsschlitten (14a, 14b) und/oder die Auflagefläche (15a, 15b) relativ zum Unterstützungsschlitten (14a, 14b) bevorzugt unter eine durch die Werkstückauflageflächen (4, 5) gebildete Werkstück-Auflageebene (E) absenkbar ist/sind.

4. Maschine nach einem der vorhergehenden Ansprüche, weiter umfassend:
eine Steuerungseinrichtung (16) zur gesteuerten Bewegung der Aufnahmeeinrichtung (18) an die Übergabeposition (Y_{UP}) sowie an die unterschiedlichen Ausschleuspositionen (Y_{A1}, Y_{A2}, ...) der Maschine (1) in der zweiten Richtung (Y).

5. Maschine nach Anspruch 4, bei der die Steuerungseinrichtung (16) ausgebildet ist, zum Unterstützen eines Werkstückteils (2a) beim Freischneiden zwei in der zweiten Richtung (Y) innerhalb des Spalts (6) verfahrbare Unterstützungsschlitten (14a, 14b) benachbart in dem Spalt (6) anzuordnen sowie zum Fallenlassen des Werkstückteils (2a) in den Spalt (6) einen Abstand (A) zwischen den beiden Unterstützungsschlitten (14a, 14b) in der zweiten Richtung (Y) zu vergrößern.

6. Maschine nach Anspruch 5, bei der die Steuerungseinrichtung (16) ausgebildet ist, die Übergabeposition (Y_{UP}) der Aufnahmeeinrichtung (18) abhängig von einer Schwerpunktposition (Y_{WS}) des Werkstückteils (2a) entlang der zweiten Richtung (Y) beim Freischneiden des Werkstückteils (2a) zu bestimmen.

7. Maschine nach Anspruch 6, bei der die Steuerungseinrichtung (16) ausgebildet ist, die Übergabeposition (Yᵤₚ) der Aufnahmeeinrichtung (18) in der zweiten Richtung (Y) versetzt zu einer Mitten-Position (Y_{M}) zwischen den einander zugewandten Kanten (30a, 30b) der Auflageflächen (15a, 15b) der beiden beim Freischneiden des Werkstückteils (2a) benachbart angeordneten Unterstützungsschlitten (14a, 14b) und insbesondere abhängig von einem Abstand (|Y_{WS} - Y_{M}|) zwischen der Schwerpunktposition (Y_{WS}) des freigeschnittenen Werkstückteils (2a) und der Mitten-Position (Y_{M}) zu bestimmen.

8. Maschine nach einem der vorhergehenden Ansprüche, weiter umfassend: einen Absaugkasten (20), der unterhalb einer Werkstück-Auflageebene (E) in dem Spalt (6) angeordnet ist.

9. Maschine nach Anspruch 8, bei welcher die Teilerutsche (17) von der ersten Stellung (S1) in die zweite Stellung (S2) verschwenkbar und/oder verschiebbar ist, wobei die Teilerutsche (17) in der ersten Stellung (S1) bevorzugt einen Abschnitt einer Seitenwand (20a) des Absaugkastens (20) bildet.

10. Maschine nach Anspruch 9, bei welcher der Absaugkasten (20) in einer Richtung (X) quer zum Spalt (6) und/oder in Höhenrichtung (Z) verschiebbar ist.

11. Maschine nach einem der vorhergehenden Ansprüche, bei welcher die Teilerutsche (17) sich in der zweiten Richtung (Y) über die gesamte Länge (L) des Spalts (6) erstreckt.

12. Maschine nach einem der vorhergehenden Ansprüche, bei welcher die Teilerutsche (17) mindestens eine Dämpfungsschicht (17c) zur Dämpfung des Aufpralls von freigeschnittenen Werkstückteilen (2a) auf die Rutschfläche (17a) aufweist.

13. Verfahren zum Ausschleusen eines Werkstückteils (2a) aus einer Maschine (1) zum trennenden Bearbeiten eines plattenförmigen Werkstücks (2) mittels eines Bearbeitungsstrahls (3), insbesondere aus einer Maschine (1) nach einem der vorhergehenden Ansprüche, umfassend:
Bewegen einer Teilerutsche (17) von einer ersten Stellung (S1) in eine zweite Stellung (S2), wobei in der ersten Stellung (S1) die Teilerutsche (17) nicht in einen Spalt (6) zwischen zwei Werkstückauflageflächen (4, 5) zur Auflage des Werkstücks (2) oder zumindest nicht in einen Verfahrbereich (33) des Bearbeitungsstrahls (3) in dem Spalt (6) hinein ragt und wobei in der zweiten Stellung (S2) eine Rutschfläche (17a) der Teilerutsche (17) in dem Spalt (6) angeordnet ist, um ein von dem Werkstück (2) freigeschnittenes, in den Spalt (6) fallendes Werkstückteil (2a) seitlich neben den Spalt (6) zu verbringen,
Aufnehmen des Werkstückteils (2a) durch eine Aufnahmeeinrichtung (18) an einer Übergabeposition (Y_{UP}) seitlich neben dem Spalt (6),
Verfahren der Aufnahmeeinrichtung (18) entlang des Spalts (6) zum Transportieren des aufgenommenen Werkstückteils (2a) an eine Ausschleusposition (Y_{A2}) entlang des Spalts (6), sowie
Ausschleusen des Werkstückteils (2a) aus der Aufnahmeeinrichtung (18) an der Ausschleusposition (Y_{A2}).

14. Verfahren nach Anspruch 13, weiter umfassend:
Anordnen von zwei innerhalb des Spalts (6) verfahrbaren Unterstützungsschlitten (14a, 14b) benachbart in dem Spalt (6) zum Unterstützen des Werkstückteils (2a) beim Freischneiden an einer Freischneideposition (FP), sowie
Vergrößern eines Abstands (A) zwischen den beiden Unterstützungsschlitten (14a, 14b) zum Fallenlassen des freigeschnittenen Werkstückteils (2a) in den Spalt (6).

15. Verfahren nach Anspruch 14, bei dem die Übergabeposition (Y_{UP}) der Aufnahmeeinrichtung (18) abhängig von einer Schwerpunktposition (Y_{WS}) des Werkstückteils (2a) entlang des Spalts (6) beim Freischneiden des Werkstückteils (2a) und insbesondere versetzt zu der Schwerpunktposition (Y_{WS}) bestimmt wird.

16. Verfahren nach Anspruch 15, bei dem die Übergabeposition (Y_{UP}) der Aufnahmeeinrichtung (18) abhängig von einem Abstand (| Y_{WS} -Y_{M} |) zwischen der Schwerpunktposition (Y_{WS}) des freigeschnittenen Werkstückteils (2a) und einer Mitten-Position (Y_{M}) zwischen den einander zugewandten Kanten (30a, 30b) der Auflageflächen (15a, 15b) der beiden beim Freischneiden des Werkstückteils (2a) benachbart angeordneten Unterstützungsschlitten (14a, 14b) bestimmt wird.

## Claims

1. A machine (1) for separative machining of a plate-shaped workpiece (2) by means of a processing beam (3), comprising:
a first movement unit (7) for moving the workpiece (2) in a first direction (X);
a second movement unit (11) for moving a processing head (9) directing the processing beam (3) onto the workpiece (2) in a second direction (Y), as well as two workpiece bearing faces (4, 5) for bearing the workpiece (2), a gap (6) that extends along the second direction (Y) being formed between said two workpiece bearing faces (4, 5),
a parts chute (17) which is movable between a first position (S1) and a second position (S2), wherein in the second position (S2) a chute face (17a) of the parts chute (17) is arranged in the gap (6) so as to move a workpiece part (2a), that is cut free from the workpiece (2) and drops into the gap (6), laterally next to the gap (6);
**characterized by**
a receiving unit (18), movable in the second direction (Y), for receiving the workpiece part (2a) at a transfer position (Y_{UP}) in the second direction (Y) as well as for transporting the workpiece part (2a) received at the transfer position (Y_{UP}) to different discharging positions (Y_{A1}, Y_{A2}, ...) of the machine (1) along the second direction (Y),
wherein the receiving unit (18) has at least one discharging unit (28a, 28b) movable between a first position (S1) for supporting the workpiece part (2a) and a second position (S2) for discharging the workpiece part (2a).

2. The machine as claimed in claim 1, wherein the discharging unit (28a, 28b) in the first position (S1) forms at least a subarea of a bottom side (27) of the receiving unit (18), and in the second position (S2) uncovers an opening (29) at least in the subarea of the bottom side (27).

3. The machine as claimed in one of the preceding claims, further comprising: at least one support slide (14a, 14b) which is displaceable in the second direction (Y) in the gap (6) and which has a bearing face (15a, 15b) for supporting workpiece parts (2a) cut during separative machining, wherein the support slide (14a, 14b) and/or or the bearing face (15a, 15b) are/is lowerable, preferably below a workpiece bearing plane (E) that is formed by the workpiece bearing faces (4, 5).

4. The machine as claimed in one of the preceding claims, further comprising:
a control unit (16) for moving the receiving unit (18) in a controlled manner to the transfer position (Y_{UP}) and to the different discharging positions (Y_{A1}, Y_{A2}, ...) of the machine (1) in the second direction (Y).

5. The machine as claimed in claim 4, wherein the control unit (16) is configured for arranging two support slides (14a, 14b) that are displaceable within the gap (6) in the second direction (Y) so as to be adjacent to each other in order to support a workpiece part (2a) when the latter is cut free, and for enlarging a spacing (A) between the two support slides (14a, 14b) in the second direction (Y) in order to drop the workpiece part (2a) into the gap (6).

6. The machine as claimed in claim 5, wherein the control unit (16) is configured for determining the transfer position (Y_{UP}) of the receiving unit (18) in dependence of a center of gravity position (Yws) of the workpiece part (2a) along the second direction (Y) when the workpiece part (2a) is cut free.

7. The machine as claimed in claim 6, wherein the control (16) is configured for determining the transfer position (Y_{UP}) of the receiving unit (18) so as to be offset in the second direction (Y) in relation to a central position (Y_{M}) between the mutually facing edges (30a, 30b) of the bearing faces (15a, 15b) of the two support slides (14a, 14b) that are arranged next to each other when the workpiece part (2a) is cut free, and in particular in dependence of a spacing (|Y_{WS} - Y_{M}|) between the center of gravity position (Yws) of the cut-free workpiece part (2a) and the central position (Y_{M}).

8. The machine as claimed in one of the preceding claims, further comprising: a suction box (20) which is arranged in the gap (6) below a workpiece bearing plane (E).

9. The machine as claimed in claim 8, wherein the parts chute (17) is pivotable and/or displaceable from the first position (S1) to the second position (S2), wherein the parts chute (17) in the first position (S1) preferably forms a portion of a side wall (20a) of the suction box (20).

10. The machine as claimed in claim 9, wherein the suction box (20) is displaceable in a direction (X) that is transverse to the gap (6), and/or is displaceable in a height direction (Z).

11. The machine as claimed in one of the preceding claims, wherein the parts chute (17) extends along the entire length (L) of the gap (6) in the second direction (Y).

12. The machine as claimed in one of the preceding claims, wherein the parts chute (17) has at least one damping layer (17c) for damping the impact of cut-free workpiece parts (2a) on the chute face (17a).

13. A method for discharging a workpiece part (2a) from a machine (1) for separative machining of a plate-shaped workpiece (2) by means of a processing beam (3), in particular from a machine (1) as claimed in one of the preceding claims, said method comprising the following steps:
moving a parts chute (17) from a first position (S1) to a second position (S2),
wherein the parts chute (17) in the first position (S1) does not protrude into a gap (6) between two workpiece bearing faces (4, 5) for bearing the workpiece (2), or at least does not protrude into a movement range (33) of the processing beam (3) in the gap (6), and wherein a chute face (17a) of the parts chute (17) in the second position (S2) is arranged in the gap (6) so as to move a workpiece part (2a), that is cut free from the workpiece (2) and drops into the gap (6), laterally next to the gap (6);
receiving the workpiece part (2a) by a receiving unit (18) at a transfer position (Y_{UP}) next to the gap (6);
displacing the receiving unit (18) along the gap (6) for transporting the received workpiece part (2a) to a discharging position (Y_{A2}) along the gap (6);
and
discharging the workpiece part (2a) from the receiving unit (18) at the discharging position (Y_{A2}).

14. The method as claimed in claim 13, further comprising:
arranging two support slides (14a, 14b) that are displaceable within the gap (6) so as to be adjacent to each other in the gap (6) for supporting the workpiece part (2a) when the latter is cut free at a cutting-free position (FP); and
enlarging a spacing (A) between the two support slides (14a, 14b) for dropping the cut-free workpiece part (2a) into the gap (6).

15. The method as claimed in claim 14, wherein the transfer position (Y_{UP}) of the receiving unit (18) is determined in dependence of a center of gravity position (Yws) of the workpiece part (2a) along the gap (6) when the workpiece part (2a) is cut free, and in particular so as to be offset from the center of gravity position (Yws).

16. The method as claimed in claim 15, wherein the transfer position (Y_{UP}) of the receiving unit (18) is determined in dependence of a spacing (| Y_{WS} -Y_{M} |) between the center of gravity position (Yws) of the cut-free workpiece part (2a) and a central position (Y_{M}) between the mutually facing edges (30a, 30b) of the bearing faces (15a, 15b) of the two support slides (14a, 14b) that are arranged adjacent to each other when the workpiece part (2a) is cut free.

## Revendications

1. Machine (1) dévolue à l'usinage séparatif d'une pièce (2) en forme de plaque, au moyen d'un faisceau d'usinage (3), comprenant :
un premier dispositif (7) de mise en mouvement, conçu pour mouvoir la pièce (2) dans une première direction (X),
un second dispositif (11) de mise en mouvement conçu pour mouvoir, dans une seconde direction (Y), une tête d'usinage (9) qui aligne ledit faisceau d'usinage (3) sur ladite pièce (2), ainsi que deux surfaces (4, 5) destinées à supporter ladite pièce (2), entre lesquelles est réservé un interstice (6) s'étendant le long de la seconde direction (Y),
une glissière (17) porte-pièces mobile entre une première position (S1) et une seconde position (S2), sachant que, dans ladite seconde position (S2), une surface de glissement (17a) de ladite glissière (17) porte-pièces est située dans l'interstice (6) de manière à transposer, latéralement par rapport audit interstice (6), une partie (2a) séparée de la pièce (2) par découpe et chutant dans ledit interstice (6),
**caractérisée par**
un dispositif de réception (18) déplaçable dans la seconde direction (Y), conçu pour recueillir la partie (2a) de la pièce en un emplacement de transfert (Y_{UP}), dans ladite seconde direction (Y), ainsi que pour transporter vers différents emplacements d'évacuation (Y_{A1}, Y_{A2}, ...) de la machine (1), le long de ladite seconde direction (Y),
ladite partie (2a) de la pièce recueillie audit emplacement de transfert (Y_{UP}),
ledit dispositif de réception (18) étant muni d'au moins un dispositif d'évacuation (28a, 28b) mobile entre une première position (S1) dédiée au soutien de la partie (2a) de la pièce, et une seconde position (S2) dédiée à l'évacuation de ladite partie (2a) de ladite pièce.

2. Machine selon la revendication 1, dans laquelle le dispositif d'évacuation (28a, 28b) forme, dans la première position (S1), au moins une zone partielle d'une région inférieure (27) du dispositif de réception (18) et libère un orifice (29), dans la seconde position (S2), au moins dans ladite zone partielle de ladite région inférieure (27).

3. Machine selon l'une des revendications précédentes, incluant en outre : au moins un chariot de soutien (14a, 14b) déplaçable dans la seconde direction (Y), à l'intérieur de l'interstice (6), et pourvu d'une surface d'appui (15a, 15b) affectée au soutien de parties (2a) de pièces découpées au cours de l'usinage séparatif, sachant que ledit chariot de soutien (14a, 14b) peut être préférentiellement abaissé au-dessous d'un plan (E) de support de pièces, formé par les surfaces (4, 5) de support desdites pièces, et/ou que ladite surface d'appui (15a, 15b) peut l'être par rapport audit chariot de soutien (14a, 14b).

4. Machine selon l'une des revendications précédentes, incluant par ailleurs : un dispositif de commande (16) conçu pour mouvoir de manière commandée, dans la seconde direction (Y), le dispositif de réception (18) vers l'emplacement de transfert (Y_{UP}), ainsi que vers les différents emplacements d'évacuation (Y_{A1}, Y_{A2}, ...) de ladite machine (1).

5. Machine selon la revendication 4, dans laquelle le dispositif de commande (16) est réalisé en vue de positionner au voisinage l'un de l'autre, dans l'interstice (6), deux chariots de soutien (14a, 14b) pouvant être déplacés dans la seconde direction (Y) à l'intérieur dudit interstice (6), afin de soutenir une partie (2a) de pièce au cours de la séparation par découpe, ainsi qu'en vue d'augmenter une distance (A) entre les deux chariots de soutien (14a, 14b), dans ladite seconde direction (Y), afin de faire chuter ladite partie (2a) de ladite pièce dans ledit interstice (6).

6. Machine selon la revendication 5, dans laquelle le dispositif de commande (16) est réalisé en vue de déterminer l'emplacement de transfert (Y_{UP}) du dispositif de réception (18) en fonction d'un emplacement (Yws) du centre de gravité de la partie (2a) de la pièce, le long de la seconde direction (Y), au cours de la séparation par découpe de ladite partie (2a) de ladite pièce.

7. Machine selon la revendication 6, dans laquelle le dispositif de commande (16) est réalisé en vue de déterminer l'emplacement de transfert (Y_{UP}) du dispositif de réception (18) dans la seconde direction (Y), décalé par rapport à un emplacement médian (Y_{M}) entre les arêtes (30a, 30b), se faisant mutuellement face, des surfaces d'appui (15a, 15b) des deux chariots de soutien (14a, 14b) occupant des positions voisines au cours de la séparation par découpe de la partie (2a) de la pièce, et notamment en fonction d'une distance (|Y_{WS} - Y_{M}|) entre l'emplacement (Y_{WS}) du centre de gravité de ladite partie (2a) de ladite pièce, séparée par découpe, et ledit emplacement médian (Y_{M}).

8. Machine selon l'une des revendications précédentes, incluant de surcroît : un caisson d'aspiration (20) logé dans l'interstice (6) au-dessous d'un plan (E) de support de pièces.

9. Machine selon la revendication 8, dans laquelle la glissière (17) porte-pièces est apte à pivoter et/ou à coulisser de la première position (S1) à la seconde position (S2), sachant que ladite glissière (17) porte-pièces forme de préférence, dans ladite première position (S1), un tronçon d'une paroi latérale (20a) du caisson d'aspiration (20).

10. Machine selon la revendication 9, dans laquelle le caisson d'aspiration (20) peut coulisser dans une direction (X), transversalement par rapport à l'interstice (6), et/ou dans la direction (Z) de la hauteur.

11. Machine selon l'une des revendications précédentes, dans laquelle la glissière (17) porte-pièces s'étend, dans la seconde direction (Y), sur l'intégralité de la longueur (L) de l'interstice (6).

12. Machine selon l'une des revendications précédentes, dans laquelle la glissière (17) porte-pièces est dotée d'au moins une couche d'amortissement (17c) conçue pour amortir l'impact, sur la surface de glissement (17a), de parties (2) de pièces séparées par découpe.

13. Procédé d'évacuation d'une partie (2a) de pièce à partir d'une machine (1) dévolue à l'usinage séparatif d'une pièce (2) en forme de plaque, au moyen d'un faisceau d'usinage (3), notamment à partir d'une machine (1) conforme à l'une des revendications précédentes, consistant à :
mouvoir une glissière (17) porte-pièces d'une première position (S1) à une seconde position (S2), sachant que, dans ladite première position (S1), ladite glissière (17) porte-pièces ne pénètre pas dans un interstice (6) réservé entre deux surfaces (4, 5) destinées à supporter la pièce (2) ou, pour le moins, pas dans une plage de déplacements (33) du faisceau d'usinage (3) dans ledit interstice (6) et sachant que, dans ladite seconde position (S2), une surface de glissement (17a) de ladite glissière (17) porte-pièces est située dans l'interstice (6) de manière à transposer, latéralement par rapport audit interstice (6), une partie (2a) séparée de la pièce (2) par découpe et chutant dans ledit interstice (6) ; à
recueillir ladite partie (2a) de la pièce au moyen d'un dispositif de réception (18) en un emplacement de transfert (Y_{UP}), latéralement par rapport audit interstice (6) ; à
déplacer ledit dispositif de réception (18) le long dudit interstice (6) en vue de transporter la partie (2a) de la pièce, à l'état recueilli, vers un emplacement d'évacuation (Y_{A2}) le long dudit interstice (6) ; ainsi qu'à
évacuer, audit emplacement d'évacuation (Y_{A2}), ladite partie (2a) de la pièce hors dudit dispositif de réception (18).

14. Procédé selon la revendication 13, consistant par ailleurs à :
positionner au voisinage l'un de l'autre, dans l'interstice (6), deux chariots de soutien (14a, 14b) pouvant être déplacés à l'intérieur dudit interstice (6), afin de soutenir la partie (2a) de la pièce en un emplacement (FP) de dissociation par découpe, au cours de la séparation par découpe ; ainsi qu'à
augmenter une distance (A) entre les deux chariots de soutien (14a, 14b), afin de faire chuter, dans ledit interstice (6), ladite partie (2a) de ladite pièce séparée par découpe.

15. Procédé selon la revendication 14, dans lequel l'emplacement de transfert (Y_{UP}) du dispositif de réception (18) est déterminé en fonction d'un emplacement (Y_{WS}) du centre de gravité de la partie (2a) de la pièce le long de l'interstice (6), au cours de la séparation par découpe de ladite partie (2a) de ladite pièce, et notamment avec décalage par rapport audit emplacement (Yws) du centre de gravité.

16. Procédé selon la revendication 15, dans lequel l'emplacement de transfert (Y_{UP}) du dispositif de réception (18) est déterminé en fonction d'une distance (|Y_{WS} - Y_{M} |) entre l'emplacement (Y_{WS}) du centre de gravité de la partie (2a) de la pièce, séparée par découpe, et un emplacement médian (Y_{M}) entre les arêtes (30a, 30b), se faisant mutuellement face, des surfaces d'appui (15a, 15b) des deux chariots de soutien (14a, 14b) occupant des positions voisines au cours de la séparation par découpe de ladite partie (2a) de ladite pièce.
